# EUROPEAN PATENT APPLICATION

(11) **EP 2 832 614 A1**
(43) Date of publication of application: **04.02.2015**
(21) Application number: 12872877.1
(22) Date of filing: 26.03.2012
(51) Int. Cl.: B60W 10/10, B60K 6/365, B60K 6/445, B60W 20/00

(54) **DRIVE CONTROL DEVICE FOR HYBRID VEHICLE**

(71) Applicant: Toyota Jidosha Kabushiki Kaisha, Toyota-shi, Aichi 471-8571 (JP)
(72) Inventor: HARADA Hiroyasu, Toyota-shi Aichi 471-8571 (JP); TERASHIMA Masato, Toyota-shi Aichi 471-8571 (JP); HAYASHI Koji, Toyota-shi Aichi 471-8571 (JP); ONO Tomohito, Toyota-shi Aichi 471-8571 (JP); ISHII Hiroyuki, Toyota-shi Aichi 471-8571 (JP)
(74) Representative: TBK
(86) International application number: PCT/JP2012/057809
(87) International publication number: WO 2013/145090

(57) **Abstract**

Provided is a drive control device for a hybrid vehicle, the drive control device being configured so that the generation of noise and vibration is reduced. A drive control device for a hybrid vehicle is provided with: a clutch (CL) for connecting and disconnecting the carrier (C1) of a first planetary gear device (14) and the carrier (C2) of a second planetary gear device (16) to and from each other; and a brake (BK) for connecting and disconnecting the carrier (C2) to and from a housing (26). During the operation of an engine (12) under load, when the torque of a second electric motor (MG2) is within a specified minute range including zero, the state of the engagement of the clutch (CL) is switched. As a result, when the torque of the second electric motor is near zero and the resonance of a power transmission system is likely to occur, the inertia balance of the power transmission system is varied to change the resonance point, suitably preventing the occurrence of resonance.

## Description

### TECHNICAL FIELD

The present invention relates to an improvement of a drive control device for a hybrid vehicle.

### BACKGROUND ART

There is known a hybrid vehicle which has at least one electric motor in addition to an engine such as an internal combustion engine, which functions as a vehicle drive power source. Patent Document 1 discloses an example of such a hybrid vehicle, which is provided with an internal combustion engine, a first electric motor and a second electric motor. This hybrid vehicle is further provided with a brake which is configured to fix an output shaft of the above-described internal combustion engine to a stationary member, and an operating state of which is controlled according to a running condition of the hybrid vehicle, so as to improve energy efficiency of the hybrid vehicle and to permit the hybrid vehicle to run according to a requirement by an operator of the hybrid vehicle.

### PRIOR ART DOCUMENT

### Patent Document

Patent Document 1: JP-2008-265600 A1

### SUMMARY OF THE INVENTION

### Object Achieved By The Invention

However, the conventional arrangement of the hybrid vehicle described above has a risk of generation of noises and vibrations during an operation of the engine, due to coincidence of an engine revolution 0.5-order component (a component of pulsation generated at a time interval equal to a half of a period of revolution of the engine), with a resonance frequency of a power transmitting system by a variation of combustion among cylinders of the engine. This problem was first discovered by the present inventors in the process of intensive studies in an attempt to improve the performance of the hybrid vehicle.

The present invention was made in view of the background art described above. It is therefore an object of the present invention to provide a drive control device for a hybrid vehicle, which permits reduction of generation of noises and vibrations.

### Means For Achieving The Object

The object indicated above is achieved according to a first aspect of the present invention, which provides a drive control device for a hybrid vehicle provided with: a first differential mechanism and a second differential mechanism which have four rotary elements as a whole; and an engine, a first electric motor, a second electric motor and an output rotary member which are respectively connected to the above-described four rotary elements, and wherein one of the above-described four rotary elements is constituted by the rotary element of the above-described first differential mechanism and the rotary element of the above-described second differential mechanism which are selectively connected to each other through a clutch, and one of the rotary elements of the above-described first and second differential mechanisms which are selectively connected to each other through the above-described clutch is selectively fixed to a stationary member through a brake, the drive control device being characterized by switching an operating state of the above-described clutch when the engine is operated in a loaded condition while a torque of the above-described second electric motor falls within a predetermined narrow range including zero.

### Advantages Of The Invention

According to the first aspect of the invention described above, the hybrid vehicle is provided with: the first differential mechanism and the second differential mechanism which have the four rotary elements as a whole; and the engine, the first electric motor, the second electric motor and the output rotary member which are respectively connected to the four rotary elements. One of the above-described four rotary elements is constituted by the rotary element of the above-described first differential mechanism and the rotary element of the above-described second differential mechanism which are selectively connected to each other through the clutch, and one of the rotary elements of the above-described first and second differential mechanisms which are selectively connected to each other through the clutch is selectively fixed to the stationary member through the brake. The drive control device is configured to switch the operating state of the above-described clutch when the engine is operated in the loaded condition while the torque of the above-described second electric motor falls within the predetermined narrow range including zero. According to this first aspect of the invention, an inertia balance of a power transmitting system is changed to change a resonance point of the power transmitting system when the torque of the second electric motor is close to zero and the power transmitting system is likely to generate a resonance, so that generation of the resonance in the power transmitting system can be effectively reduced. Namely, the present invention provides a drive control device for a hybrid vehicle, which permits reduction of generation of vibrations in a power transmitting system of the hybrid vehicle.

According to a second aspect of the invention, the drive control device according to the first aspect of the invention is configured to switch the operating state of the above-described clutch when the above-described engine is operated in the loaded condition while the torque of the above-described second electric motor falls within the predetermined narrow range including zero, and when generation of a resonance has been detected or forecasted. According to this second aspect of the invention, the inertia balance of the power transmitting system is changed to change the resonance point of the power transmitting system when the torque of the second electric motor is close to zero and generation of the resonance in the power transmitting system is detected or forecasted, so that generation of the resonance in the power transmitting system can be effectively reduced.

According to a third aspect of the invention, the drive control device according to the first or second aspect of the invention is configured such that the above-described first differential mechanism is provided with a first rotary element connected to the above-described first electric motor, and a second rotary element connected to the above-described engine, and a third rotary element connected to the above-described output rotary member, while the above-described second differential mechanism is provided with a first rotary element connected to the above-described second electric motor, a second rotary element, and a third rotary element, one of the second and third rotary elements being connected to the third rotary element of the above-described first differential mechanism, and wherein the above-described clutch is configured to selectively connect the second rotary element of the above-described first differential mechanism, and the other of the second and third rotary elements of the above-described second differential mechanism which is not connected to the third rotary element of the above-described first differential mechanism, to each other, while the above-described brake is configured to selectively fix the other of the second and third rotary elements of the above-described second differential mechanism which is not connected to the third rotary element of the above-described first differential mechanism, to the stationary member. According to this third aspect of the invention, it is possible to reduce generation of the vibrations in the power transmitting system of drive system of the hybrid vehicle, which has a highly practical arrangement.

### BRIEF DESCRIPTION OF THE DRAWINGS

Fig. 1 is a schematic view for explaining an arrangement of a hybrid vehicle drive system to which the present invention is suitably applicable;
Fig. 2 is a view for explaining major portions of a control system provided to control the drive system of Fig. 1;
Fig. 3 is a table indicating combinations of operating states of a clutch and a brake, which correspond to respective five drive modes of the drive system of Fig. 1;
Fig. 4 is a collinear chart having straight lines which permit indication thereon of relative rotating speeds of various rotary elements of the drive system of Fig. 1, the collinear chart corresponding to the modes 1 and 3 of Fig. 3;
Fig. 5 is a collinear chart having straight lines which permit indication thereon of relative rotating speeds of various rotary elements of the drive system of Fig. 1, the collinear chart corresponding to the mode 2 of Fig. 3;
Fig. 6 is a collinear chart having straight lines which permit indication thereon of relative rotating speeds of various rotary elements of the drive system of Fig. 1, the collinear chart corresponding to the mode 4 of Fig. 3;
Fig. 7 is a collinear chart having straight lines which permit indication thereon of relative rotating speeds of various rotary elements of the drive system of Fig. 1, the collinear chart corresponding to the mode 5 of Fig. 3;
Fig. 8 is a view for explaining transmission efficiency of the drive system of Fig. 1;
Fig. 9 is a functional block diagram for explaining major control functions of an electronic control device provided for the drive system of Fig. 1;
Fig. 10 is a view schematically illustrating different resonance frequency values of a power transmitting system in the drive system of Fig. 1, which correspond to the respective different operating states of the clutch;
Fig. 11 is a view for explaining different characteristics (resonance frequency characteristics) of the power transmitting system in the drive system of Fig. 1, which correspond to the respective different operating states of the clutch;
Fig. 12 is a view schematically illustrating different resonance frequency values of the power transmitting system in the drive system of Fig. 1, which correspond to respective different combinations of the operating states of the clutch and brake;
Fig. 13 is a view for explaining different characteristics (resonance frequency characteristics) of the power transmitting system in the drive system of Fig. 1, which correspond to the respective different combinations of the operating states of the clutch and brake;
Fig. 14 is a view illustrating regions of an operating point of an engine in which noises are generated due to resonance when the clutch is placed in a released state;
Fig. 15 is a view illustrating regions of the operating point of the engine in which the noises are generated due to resonance when the clutch is placed in an engaged state;
Fig. 16 is a flow chart for explaining a major portion of a resonance point change control implemented by the electronic control device provided for the drive system of Fig. 1;
Fig. 17 is a flow chart for explaining a major portion of another resonance point change control implemented by the electronic control device provided for the drive system of Fig. 1;
Fig. 18 is a schematic view for explaining an arrangement of a hybrid vehicle drive system according to another preferred embodiment of this invention;
Fig. 19 is a schematic view for explaining an arrangement of a hybrid vehicle drive system according to a further preferred embodiment of this invention;
Fig. 20 is a schematic view for explaining an arrangement of a hybrid vehicle drive system according to a still further preferred embodiment of this invention;
Fig. 21 is a schematic view for explaining an arrangement of a hybrid vehicle drive system according to a yet further preferred embodiment of this invention;
Fig. 22 is a schematic view for explaining an arrangement of a hybrid vehicle drive system according to still another preferred embodiment of this invention;
Fig. 23 is a schematic view for explaining an arrangement of a hybrid vehicle drive system according to yet another preferred embodiment of this invention;
Fig. 24 is a collinear chart for explaining an arrangement and an operation of a hybrid vehicle drive system according to another preferred embodiment of this invention;
Fig. 25 is a collinear chart for explaining an arrangement and an operation of a hybrid vehicle drive system according to a further preferred embodiment of this invention; and
Fig. 26 is a collinear chart for explaining an arrangement and an operation of a hybrid vehicle drive system according to a still further preferred embodiment of this invention.

### MODE FOR CARRYING OUT THE INVENTION

According to the present invention, the first and second differential mechanisms as a whole have four rotary elements while the above-described clutch is placed in the engaged state. In one preferred form of the present invention, the first and second differential mechanisms as a whole have four rotary elements while a plurality of clutches, each of which is provided between the rotary elements of the first and second differential mechanisms and which includes the above-described clutch, are placed in their engaged states. In other words, the present invention is suitably applicable to a drive control device for a hybrid vehicle which is provided with the first and second differential mechanisms represented as the four rotary elements indicated in a collinear chart, and the engine, the first electric motor, the second electric motor and the output rotary member which are connected to the respective four rotary elements, and wherein one of the four rotary elements is selectively connected through the above-described clutch to another of the rotary elements of the first differential mechanism and another of the rotary elements of the second differential mechanism, while the rotary element of the first or second differential mechanism to be selectively connected to the above-indicated one rotary element through the clutch is selectively fixed through the above-described brake to the stationary member.

In another preferred form of the present invention, the above-described clutch and brake are hydraulically operated coupling devices operating states (engaged and released states) of which are controlled according to a hydraulic pressure. While wet multiple-disc type frictional coupling devices are preferably used as the clutch and brake, meshing type coupling devices, namely, so-called dog clutches (claw clutches) may also be used. Alternatively, the clutch and brake may be electromagnetic clutches, magnetic powder clutches and any other clutches the operating states of which are controlled (which are engaged and released) according to electric commands.

The drive system to which the present invention is applicable is placed in a selected one of a plurality of drive modes, depending upon the operating states of the above-described clutch and brake. Preferably, EV drive modes in which at least one of the above-described first and second electric motors is used as a vehicle drive power source while the engine is held at rest include a mode 1 to be established in the engaged state of the brake and in the released state of the clutch, and a mode 2 to be established in the engaged states of both of the clutch and brake. Further, hybrid drive modes in which the above-described engine is operated while the above-described first and second electric motors are operated to generate a vehicle drive force and/or an electric energy as needed, include a mode 3 to be established in the engaged state of the brake and in the released state of the clutch, a mode 4 to be established in the released state of the brake and the engaged state of the clutch, and a mode 5 to be established in the released states of both of the brake and clutch.

In a further preferred form of the invention, the rotary elements of the above-described first differential mechanism, and the rotary elements of the above-described second differential mechanism are arranged as seen in the collinear charts, in the engaged state of the above-described clutch and in the released state of the above-described brake, in the order of the first rotary element of the first differential mechanism, the first rotary element of the second differential mechanism, the second rotary element of the first differential mechanism, the second rotary element of the second differential mechanism, the third rotary element of the first differential mechanism, and the third rotary element of the second differential mechanism, where the rotating speeds of the second rotary elements and the third rotary elements of the first and second differential mechanisms are indicated in mutually overlapping states in the collinear charts.

In a further preferred form of the invention, the operating state of the clutch is switched to the engaged state when the engine is operated in a loaded condition while the torque of the above-described second electric motor falls within the predetermined narrow range including zero. Namely, the clutch is placed in the engaged state even when the presently selected drive mode is a drive mode established by releasing the clutch. More preferably, the clutch is placed in the engaged state when the above-described engine is operated in a loaded condition while the torque of the second electric motor falls within the predetermined narrow range including zero, and when generation of a resonance is detected or forecasted.

In a further preferred form of the invention, it is determined that generation of a resonance in the power transmitting system is detected or forecasted when a temperature of the power transmitting system is equal to or lower than a predetermined threshold value. Preferably, it is determined that generation of a resonance in the power transmitting system is detected or forecasted when an EGR device is operated to return a portion of an exhaust gas of the engine into an intake gas. Preferably, it is determined that generation of a resonance in the power transmitting system is detected or forecasted when the engine is operated to warm up a catalytic converter.

Referring to the drawings, preferred embodiments of the present invention will be described in detail. It is to be understood that the drawings referred to below do not necessarily accurately represent ratios of dimensions of various elements.

### FIRST EMBODIMENT

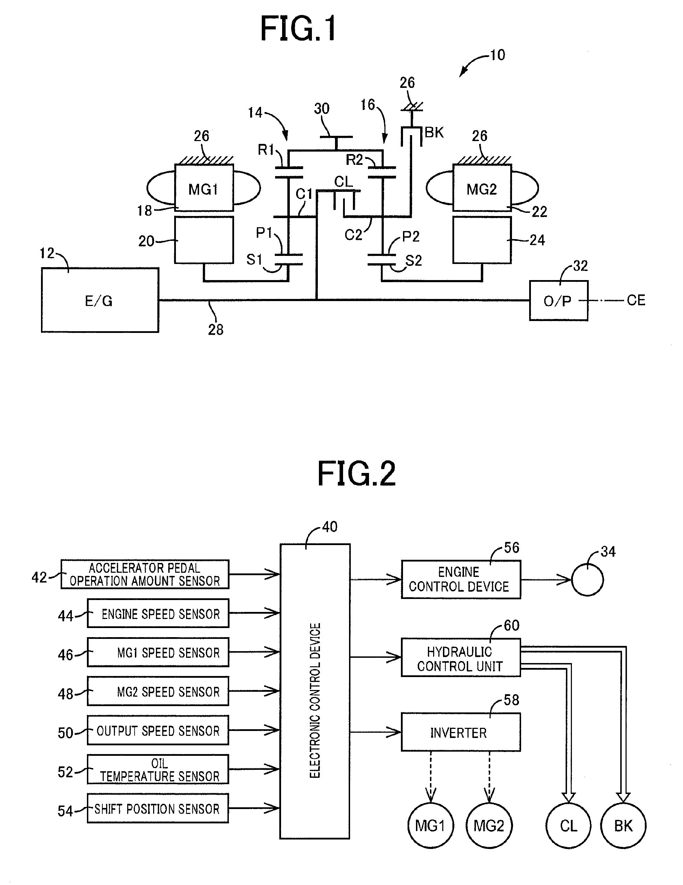

Fig. 1 is the schematic view for explaining an arrangement of a hybrid vehicle drive system 10 (hereinafter referred to simply as a "drive system 10") to which the present invention is suitably applicable. As shown in Fig. 1, the drive system 10 according to the present embodiment is of a transversely installed type suitably used for an FF (front-engine front-drive) type vehicle, and is provided with a main vehicle drive power source in the form of an engine 12, a first electric motor MG1, a second electric motor MG2, a first differential mechanism in the form of a first planetary gear set 14, and a second differential mechanism in the form of a second planetary gear set 16, which are disposed on a common center axis CE. The drive system 10 is constructed substantially symmetrically with respect to the center axis CE. In Fig. 1, a lower half of the drive system 10 is not shown. This description applies to other embodiments which will be described.

The engine 12 is an internal combustion engine such as a gasoline engine, which is operable to generate a drive force by combustion of a fuel such as a gasoline injected into its cylinders. Each of the first electric motor MG1 and second electric motor MG2 is a so-called motor/generator having a function of a motor operable to generate a drive force, and a function of an electric generator operable to generate a reaction force, and is provided with a stator 18, 22 fixed to a stationary member in the form of a housing (casing) 26, and a rotor 20, 24 disposed radially inwardly of the stator 18, 22.

The first planetary gear set 14 is a single-pinion type planetary gear set which has a gear ratio ρ1 and which is provided with rotary elements (elements) consisting of: a first rotary element in the form of a sun gear S1; a second rotary element in the form of a carrier C1 supporting a pinion gear P1 such that the pinion gear P1 is rotatable about its axis and the axis of the planetary gear set; and a third rotary element in the form of a ring gear R1 meshing with the sun gear S1 through the pinion gear P1. The second planetary gear set 16 is a single-pinion type planetary gear set which has a gear ratio p2 and which is provided with rotary elements (elements) consisting of: a first rotary element in the form of a sun gear S2; a second rotary element in the form of a carrier C2 supporting a pinion gear P2 such that the pinion gear P2 is rotatable about its axis and the axis of the planetary gear set; and a third rotary element in the form of a ring gear R2 meshing with the sun gear S2 through the pinion gear P2.

The sun gear S1 of the first planetary gear set 14 is connected to the rotor 20 of the first electric motor MG1. The carrier C1 of the first planetary gear set 14 is connected to an input shaft 28 which is rotated integrally with a crankshaft of the engine 12. This input shaft 28 is rotated about the center axis CE. In the following description, the direction of extension of this center axis CE will be referred to as an "axial direction", unless otherwise specified. The ring gear R1 of the first planetary gear set 14 is connected to an output rotary member in the form of an output gear 30, and to the ring gear R2 of the second planetary gear set 16. The sun gear S2 of the second planetary gear set 16 is connected to the rotor 24 of the second electric motor MG2.

The drive force received by the output gear 30 is transmitted to a pair of left and right drive wheels (not shown) through a differential gear device not shown and axles not shown. On the other hand, a torque received by the drive wheels from a roadway surface on which the vehicle is running is transmitted (input) to the output gear 30 through the differential gear device and axles, and to the drive system 10. A mechanical oil pump 32, which is a vane pump, for instance, is connected to one of opposite end portions of the input shaft 28, which one end portion is remote from the engine 12. The oil pump 32 is operated by the engine 12, to generate a hydraulic pressure to be applied to a hydraulic control unit 60, etc. which will be described. An electrically operated oil pump which is operated with an electric energy may be provided in addition to the oil pump 32.

Between the carrier C1 of the first planetary gear set 14 and the carrier C2 of the second planetary gear set 16, there is disposed a clutch CL which is configured to selectively couple these carriers C1 and C2 to each other (to selectively connect the carriers C1 and C2 to each other or disconnect the carriers C1 and C2 from each other). Between the carrier C2 of the second planetary gear set 16 and the stationary member in the form of the housing 26, there is disposed a brake BK which is configured to selectively couple (fix) the carrier C2 to the housing 26. Each of these clutch CL and brake BK is a hydraulically operated coupling device the operating state of which is controlled (which is engaged and released) according to the hydraulic pressure applied thereto from the hydraulic control unit 60. While wet multiple-disc type frictional coupling devices are preferably used as the clutch CL and brake BK, meshing type coupling devices, namely, so-called dog clutches (claw clutches) may also be used. Alternatively, the clutch CL and brake BK may be electromagnetic clutches, magnetic powder clutches and any other clutches the operating states of which are controlled (which are engaged and released) according to electric commands generated from an electronic control device 40.

As shown in Fig. 1, the drive system 10 is configured such that the first planetary gear set 14 and second planetary gear set 16 are disposed coaxially with the input shaft 28 (disposed on the center axis CE), and opposed to each other in the axial direction of the center axis CE. Namely, the first planetary gear set 14 is disposed on one side of the second planetary gear set 16 on a side of the engine 12, in the axial direction of the center axis CE. The first electric motor MG1 is disposed on one side of the first planetary gear set 14 on the side of the engine 12, in the axial direction of the center axis CE. The second electric motor MG1 is disposed on one side of the second planetary gear set 16 which is remote from the engine 12, in the axial direction of the center axis CE. Namely, the first electric motor MG1 and second electric motor MG2 are opposed to each other in the axial direction of the center axis CE, such that the first planetary gear set 14 and second planetary gear set 16 are interposed between the first electric motor MG1 and second electric motor MG2. That is, the drive system 10 is configured such that the first electric motor MG1, first planetary gear set 14, clutch CL, second planetary gear set 16, brake BK and second electric motor MG2 are disposed coaxially with each other, in the order of description from the side of the engine 12, in the axial direction of the center axis CE.

Fig. 2 is the view for explaining major portions of a control system provided to control the drive system 10. The electronic control device 40 shown in Fig. 2 is a so-called microcomputer which incorporates a CPU, a ROM, a RAM and an input-output interface and which is operable to perform signal processing operations according to programs stored in the ROM while utilizing a temporary data storage function of the RAM, to implement various drive controls of the drive system 10, such as a drive control of the engine 12 and hybrid drive controls of the first electric motor MG1 and second electric motor MG2. In the present embodiment, the electronic control device 40 corresponds to a drive control device for a hybrid vehicle having the drive system 10. The electronic control device 40 may be constituted by mutually independent control units as needed for respective controls such as an output control of the engine 12 and drive controls of the first electric motor MG1 and second electric motor MG2.

As indicated in Fig. 2, the electronic control device 40 is configured to receive various signals from sensors and switches provided in the drive system 10. Namely, the electronic control device 40 receives: an output signal of an accelerator pedal operation amount sensor 42 indicative of an operation amount or angle A_{CC} of an accelerator pedal (not shown), which corresponds to a vehicle output required by a vehicle operator; an output signal of an engine speed sensor 44 indicative of an engine speed N_{E}, that is, an operating speed of the engine 12; an output signal of an MG1 speed sensor 46 indicative of an operating speed N_{MG1} of the first electric motor MG1; an output signal of an MG2 speed sensor 48 indicative of an operating speed N_{MG2} of the second electric motor MG2; an output signal of an output speed sensor 50 indicative of a rotating speed N_{OUT} of the output gear 30, which corresponds to a running speed V of the vehicle; an output signal of an oil temperature sensor 52 indicative of a temperature T_{OIL} of a working fluid to be supplied to various parts of the drive system 10; and an output signal of a shift position sensor 54 indicative of a presently selected one of shift positions P_{S} of a manually operated shifting device not shown.

The electronic control device 40 is also configured to generate various control commands to be applied to various portions of the drive system 10. Namely, the electronic control device 40 applies to an engine control device 56 for controlling an output of the engine 12, following engine output control commands for controlling the output of the engine 12, which commands include: a fuel injection amount control signal to control an amount of injection of a fuel by a fuel injecting device into an intake pipe; an ignition control signal to control a timing of ignition of the engine 12 by an igniting device; an electronic throttle valve drive control signal to control a throttle actuator for controlling an opening angle θ_{TH} of an electronic throttle valve; and an EGR valve drive signal to control an angle of opening (opening and closing actions) of an EGR valve 34. The EGR valve 34 is provided to control an amount of recirculation of an exhaust gas of the engine 12 into an intake pipe to implement an EGR operation (Exhaust-Gas Recirculation) for returning a portion of the exhaust gas into an intake gas. Further, the electronic control device 40 applies command signals to an inverter 58, for controlling operations of the first electric motor MG1 and second electric motor MG2, so that the first and second electric motors MG1 and MG2 are operated with electric energies supplied thereto from a battery through the inverter 58 according to the command signals to control outputs (output torques) of the electric motors MG1 and MG2. Electric energies generated by the first and second electric motors MG1 and MG2 are supplied to and stored in the battery through the inverter 58. Further, the electronic control device 40 applies command signals for controlling the operating states of the clutch CL and brake BK, to linear solenoid valves and other electromagnetic control valves provided in the hydraulic control unit 60, so that hydraulic pressures generated by those electromagnetic control valves are controlled to control the operating states of the clutch CL and brake BK.

An operating state of the drive system 10 is controlled through the first electric motor MG1 and second electric motor MG2, such that the drive system 10 functions as an electrically controlled differential portion whose difference of input and output speeds is controllable. For example, an electric energy generated by the first electric motor MG1 is supplied to the battery or the second electric motor MG2 through the inverter 58. Namely, a major portion of the drive force of the engine 12 is mechanically transmitted to the output gear 30, while the remaining portion of the drive force is consumed by the first electric motor MG1 operating as the electric generator, and converted into the electric energy, which is supplied to the second electric motor MG2 through the inverter 58, so that the second electric motor MG2 is operated to generate a drive force to be transmitted to the output gear 30. Components associated with the generation of the electric energy and the consumption of the generated electric energy by the second electric motor MG2 constitute an electric path through which a portion of the drive force of the engine 12 is converted into an electric energy which is converted into a mechanical energy.

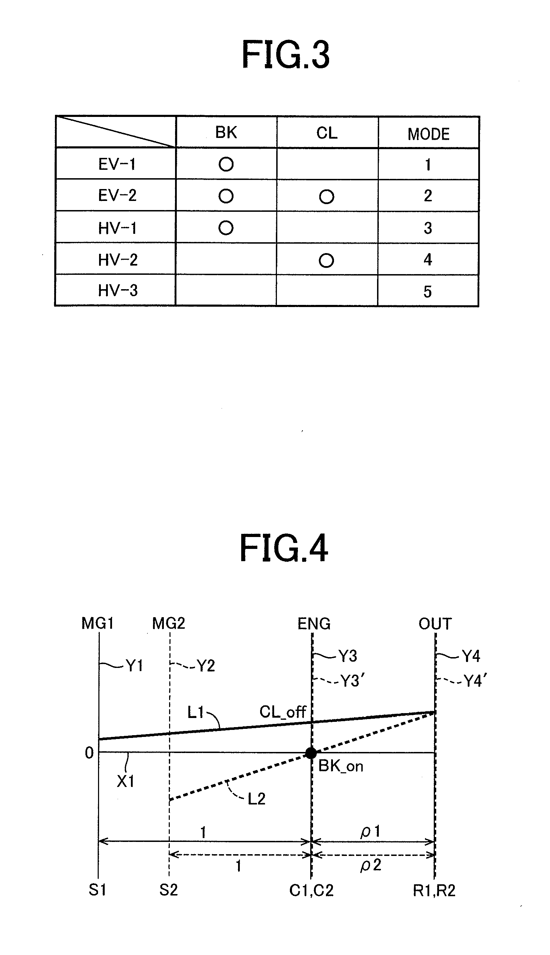

In the hybrid vehicle provided with the drive system 10 constructed as described above, one of a plurality of drive modes is selectively established according to the operating states of the engine 12, first electric motor MG1 and second electric motor MG2, and the operating states of the clutch CL and brake BK. Fig. 3 is the table indicating combinations of the operating states of the clutch CL and brake BK, which correspond to the respective five drive modes of the drive system 10. In this table, "o" marks represent an engaged state while blanks represent a released state. The drive modes EV-1 and EV-2 indicated in Fig. 3 are EV drive modes in which the engine 12 is held at rest while at least one of the first electric motor MG1 and second electric motor MG2 is used as a vehicle drive power source. The drive modes HV-1, HV-2 and HV-3 are hybrid drive modes (HV modes) in which the engine 12 is operated as the vehicle drive power source while the first electric motor MG1 and second electric motor MG2 are operated as needed to generate a vehicle drive force and/or an electric energy. In these hybrid drive modes, at least one of the first electric motor MG1 and second electric motor MG2 is operated to generate a reaction force or placed in a non-load free state.

As is apparent from Fig. 3, the EV drive modes of the drive system 10 in which the engine 12 is held at rest while at least one of the first electric motor MG1 and second electric motor MG2 is used as the vehicle drive power source consist of: a mode 1 (drive mode 1) in the form of the drive mode EV-1 which is established in the engaged state of the brake BK and in the released state of the clutch CL; and a mode 2 (drive mode 2) in the form of the drive mode EV-2 which is established in the engaged states of both of the brake BK and clutch CL. The hybrid drive modes in which the engine 12 is operated as the vehicle drive power source while the first electric motor MG1 and second electric motor MG2 are operated as needed to generate a vehicle drive force and/or an electric energy, consist of: a mode 3 (drive mode 3) in the form of the drive mode HV-1 which is established in the engaged state of the brake BK and in the released state of the clutch CL; a mode 4 (drive mode 4) in the form of the drive mode HV-2 which is established in the released state of the brake BK and in the engaged state of the clutch CL; and a mode 5 (drive mode 5) in the form of the drive mode HV-3 which is established in the released states of both of the brake BK and clutch CL.

Figs. 4-7 are the collinear charts having straight lines which permit indication thereon of relative rotating speeds of the various rotary elements of the drive system 10 (first planetary gear set 14 and second planetary gear set 16), which rotary elements are connected to each other in different manners corresponding to respective combinations of the operating states of the clutch CL and brake BK. These collinear charts are defined in a two-dimensional coordinate system having a horizontal axis along which relative gear ratios p of the first and second planetary gear sets 14 and 16 are taken, and a vertical axis along which the relative rotating speeds are taken. The collinear charts indicate the relative rotating speeds when the output gear 30 is rotated in the positive direction to drive the hybrid vehicle in the forward direction. A horizontal line X1 represents the rotating speed of zero, while vertical lines Y1 through Y4 arranged in the order of description in the rightward direction represent the respective relative rotating speeds of the sun gear S1, sun gear S2, carrier C1 and ring gear R1. Namely, a solid line Y1 represents the relative rotating speed of the sun gear S1 of the first planetary gear set 14 (operating speed of the first electric motor MG1), a broken line Y2 represents the relative rotating speed of the sun gear S2 of the second planetary gear set 16 (operating speed of the second electric motor MG2), a solid line Y3 represents the relative rotating speed of the carrier C1 of the first planetary gear set 14 (operating speed of the engine 12), a broken line Y3' represents the relative rotating speed of the carrier C2 of the second planetary gear set 16, a solid line Y4 represents the relative rotating speed of the ring gear R1 of the first planetary gear set 14 (rotating speed of the output gear 30), and a broken line Y4' represents the relative rotating speed of the ring gear R2 of the second planetary gear set 16. In Figs. 4-7, the vertical lines Y3 and Y3' are superimposed on each other, while the vertical lines Y4 and Y4' are superimposed on each other. Since the ring gears R1 and R2 are fixed to each other, the relative rotating speeds of the ring gears R1 and R2 represented by the vertical lines Y4 and Y4' are equal to each other.

In Figs. 4-7, a solid line L1 represents the relative rotating speeds of the three rotary elements of the first planetary gear set 14, while a broken line L2 represents the relative rotating speeds of the three rotary elements of the second planetary gear set 16. Distances between the vertical lines Y1-Y4 (Y2-Y4') are determined by the gear ratios ρ1 and ρ2 of the first and second planetary gear sets 14 and 16. Described more specifically, regarding the vertical lines Y1, Y3 and Y4 corresponding to the respective three rotary elements in the form of the sun gear S1, carrier C1 and ring gear R1 of the first planetary gear set 14, a distance between the vertical lines Y1 and Y3 corresponds to "1", while a distance between the vertical lines Y3 and Y4 corresponds to the gear ratio "ρ1". Regarding the vertical lines Y2, Y3' and Y4' corresponding to the respective three rotary elements in the form of the sun gear S2, carrier C2 and ring gear R2 of the second planetary gear set 16, a distance between the vertical lines Y2 and Y3' corresponds to "1", while a distance between the vertical lines Y3' and Y4' corresponds to the gear ratio "p2". In the drive system 10, the gear ratio p2 of the second planetary gear set 16 is higher than the gear ratio ρ1 of the first planetary gear set 14 (p2 > ρ1). The drive modes of the drive system 10 will be described by reference to Figs. 4-7.

The drive mode EV-1 indicated in Fig. 3 corresponds to the mode 1 (drive mode 1) of the drive system 10, which is preferably the EV drive mode in which the engine 12 is held at rest while the second electric motor MG2 is used as the vehicle drive power source. Fig. 4 is the collinear chart corresponding to the mode 1. Described by reference to this collinear chart, the carrier C1 of the first planetary gear set 14 and the carrier C2 of the second planetary gear set 16 are rotatable relative to each other in the released state of the clutch CL. In the engaged state of the brake BK, the carrier C2 of the second planetary gear set 16 is coupled (fixed) to the stationary member in the form of the housing 26, so that the rotating speed of the carrier C2 is held zero. In this mode 1, the rotating direction of the sun gear S2 and the rotating direction of the ring gear R2 in the second planetary gear set 16 are opposite to each other, so that when the second electric motor MG2 is operated to generate a negative torque (acting in the negative direction), the ring gear R2, that is, the output gear 30 is rotated in the positive direction by the generated negative torque. Namely, the hybrid vehicle provided with the drive system 10 is driven in the forward direction when the negative torque is generated by the second electric motor MG2. In this case, the first electric motor MG1 is preferably held in a free state. In this mode 1, the carriers C1 and C2 are permitted to be rotated relative to each other, so that the hybrid vehicle can be driven in the EV drive mode similar to an EV drive mode which is established in a vehicle provided with a so-called "THS" (Toyota Hybrid System) and in which the carrier C2 is fixed to the stationary member.

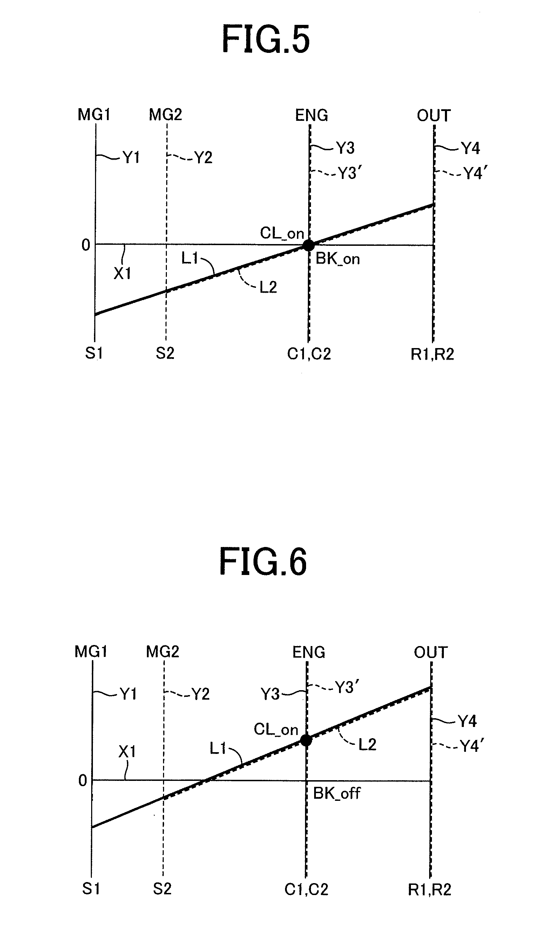

The drive mode EV-2 indicated in Fig. 3 corresponds to the mode 2 (drive mode 2) of the drive system 10, which is preferably the EV drive mode in which the engine 12 is held at rest while at least one of the first electric motor MG1 and second electric motor MG2 is used as the vehicle drive power source. Fig. 5 is the collinear chart corresponding to the mode 2. Described by reference to this collinear chart, the carrier C1 of the first planetary gear set 14 and the carrier C2 of the second planetary gear set 16 are not rotatable relative to each other in the engaged state of the clutch CL. Further, in the engaged state of the brake BK, the carrier C2 of the second planetary gear set 16 and the carrier C of the first planetary gear set 14 which is connected to the carrier C2 are coupled (fixed) to the stationary member in the form of the housing 26, so that the rotating speeds of the carriers C1 and C2 are held zero. In this mode 2, the rotating direction of the sun gear S1 and the rotating direction of the ring gear R1 in the first planetary gear set 14 are opposite to each other, and the rotating direction of the sun gear S2 and the rotating direction of the ring gear R2 in the second planetary gear set 16 are opposite to each other, so that when the first electric motor MG1 and/or second electric motor MG2 is/are operated to generate a negative torque (acting in the negative direction), the ring gears R1 and R2 are rotated, that is, the output gear 30 is rotated in the positive direction by the generated negative torque. Namely, the hybrid vehicle provided with the drive system 10 is driven in the forward direction when the negative torque is generated by at least one of the first electric motor MG1 and second electric motor MG2.

In the mode 2, at least one of the first electric motor MG1 and second electric motor MG2 may be operated as the electric generator. In this case, one or both of the first and second electric motors MG1 and MG2 may be operated to generate a vehicle drive force (torque), at an operating point assuring a relatively high degree of operating efficiency, and/or with a reduced degree of torque limitation due to heat generation. Further, at least one of the first and second electric motors MG1 and MG2 may be held in a free state, when the generation of an electric energy by a regenerative operation of the electric motors MG1 and MG2 is inhibited due to full charging of the battery. Namely, the mode 2 is an EV drive mode which may be established under various running conditions of the hybrid vehicle or may be kept for a relatively long length of time. Accordingly, the mode 2 is advantageously provided on a hybrid vehicle such as a plug-in hybrid vehicle, which is frequently placed in an EV drive mode.

The drive mode HV-1 indicated in Fig. 3 corresponds to the mode 3 (drive mode 3) of the drive system 10, which is preferably the HV drive mode in which the engine 12 is used as the vehicle drive power source while the first electric motor MG1 and second electric motor MG2 are operated as needed to generate a vehicle drive force and/or an electric energy. Fig. 4 is the collinear chart corresponding to the mode 3. Described by reference to this collinear chart, the carrier C1 of the first planetary gear set 14 and the carrier C2 of the second planetary gear set 16 are rotatable relative to each other, in the released state of the clutch CL. In the engaged state of the brake BK, the carrier C2 of the second planetary gear set 16 is coupled (fixed) to the stationary member in the form of the housing 26, so that the rotating speed of the carrier C2 is held zero. In this mode 3, the engine 12 is operated to generate an output torque by which the output gear 30 is rotated. At this time, the first electric motor MG1 is operated to generate a reaction torque in the first planetary gear set 14, so that the output of the engine 12 can be transmitted to the output gear 30. In the second planetary gear set 16, the rotating direction of the sun gear S2 and the rotating direction of the ring gear R2 are opposite to each other, in the engaged state of the brake BK, so that when the second electric motor MG2 is operated to generate a negative torque (acting in the negative direction), the ring gears R1 and R2 are rotated, that is, the output gear 30 is rotated in the positive direction by the generated negative torque.

The drive mode HV-2 indicated in Fig. 3 corresponds to the mode 4 (drive mode 4) of the drive system 10, which is preferably the HV drive mode in which the engine 12 is used as the vehicle drive power source while the first electric motor MG1 and second electric motor MG2 are operated as needed to generate a vehicle drive force and/or an electric energy. Fig. 6 is the collinear chart corresponding to the mode 4. Described by reference to this collinear chart, the carrier C1 of the first planetary gear set 14 and the carrier C2 of the second planetary gear set 16 are not rotatable relative to each other, in the engaged state of the clutch CL, that is, the carriers C1 and C2 are integrally rotated as a single rotary element. The ring gears R1 and R2, which are fixed to each other, are integrally rotated as a single rotary element. Namely, in the mode 4 of the drive system 10, the first planetary gear set 14 and second planetary gear set 16 function as a differential mechanism having a total of four rotary elements. That is, the drive mode 4 is a composite split mode in which the four rotary elements consisting of the sun gear S1 (connected to the first electric motor MG1), the sun gear S2 (connected to the second electric motor MG2), the rotary element constituted by the carriers C1 and C2 connected to each other (and to the engine 12), and the rotary element constituted by the ring gears R1 and R2 fixed to each other (and connected to the output gear 30) are connected to each other in the order of description in the rightward direction as seen in Fig. 6.

In the mode 4, the rotary elements of the first planetary gear set 14 and second planetary gear set 16 are preferably arranged as indicated in the collinear chart of Fig. 6, that is, in the order of the sun gear S1 represented by the vertical line Y1, the sun gear S2 represented by the vertical line Y2, the carriers C1 and C2 represented by the vertical line Y3 (Y3'), and the ring gears R1 and R2 represented by the vertical line Y4 (Y4'). The gear ratios ρ1 and p2 of the first and second planetary gear sets 14 and 16 are determined such that the vertical line Y1 corresponding to the sun gear S1 and the vertical line Y2 corresponding to the sun gear S2 are positioned as indicated in the collinear chart of Fig. 6, namely, such that the distance between the vertical lines Y1 and Y3 is longer than the distance between the vertical lines Y2 and Y3'. In other words, the distance between the vertical lines corresponding to the sun gear S1 and the carrier C1 and the distance between the vertical lines corresponding to the sun gear S2 and the carrier C2 correspond to "1", while the distance between the vertical lines corresponding to the carrier C1 and the ring gear R1 and the distance between the vertical lines corresponding to the carrier C2 and the ring gear R2 correspond to the respective gear ratios ρ1 and p2. Accordingly, the drive system 10 is configured such that the gear ratio p2 of the second planetary gear set 16 is higher than the gear ratio ρ1 of the first planetary gear set 14.

In the mode 4, the carrier C1 of the first planetary gear set 14 and the carrier C2 of the second planetary gear set 16 are connected to each other in the engaged state of the clutch CL, so that the carriers C1 and C2 are rotated integrally with each other. Accordingly, either one or both of the first electric motor MG1 and second electric motor MG2 can receive a reaction force corresponding to the output of the engine 12. Namely, one or both of the first and second electric motors MG1 and MG2 can be operated to receive the reaction force during an operation of the engine 12, and each of the first and second electric motors MG1 and MG2 can be operated at an operating point assuring a relatively high degree of operating efficiency, and/or with a reduced degree of torque limitation due to heat generation.

For example, one of the first electric motor MG1 and second electric motor MG2 which is operable with a higher degree of operating efficiency is preferentially operated to generate a reaction force, so that the overall operating efficiency can be improved. When the hybrid vehicle is driven at a comparatively high running speed V and at a comparatively low engine speed N_{E}, for instance, the operating speed N_{MG1} of the first electric motor MG1 may have a negative value, that is, the first electric motor MG1 may be operated in the negative direction. In the case where the first electric motor MG1 generates the reaction force acting on the engine 12, the first electric motor MG1 is operated in the negative direction so as to generate a negative torque with consumption of an electric energy, giving rise to a risk of reduction of the operating efficiency. In this respect, it will be apparent from Fig. 6 that in the drive system 10, the operating speed of the second electric motor MG2 indicated on the vertical line Y2 is less likely to have a negative value than the operating speed of the above-indicated first electric motor MG1 indicated on the vertical line Y1, and the second electric motor MG2 may possibly be operated in the positive direction, during generation of the reaction force. Accordingly, it is possible to improve the operating efficiency to improve the fuel economy, by preferentially controlling the second electric motor MG2 so as to generate the reaction force, while the operating speed of the first electric motor MG1 has a negative value. Further, where there is a torque limitation of one of the first electric motor MG1 and second electric motor MG2 due to heat generation, it is possible to ensure the generation of the reaction force required for the engine 12, by controlling the other electric motor so as to perform a regenerative operation or a vehicle driving operation, for providing an assisting vehicle driving force.

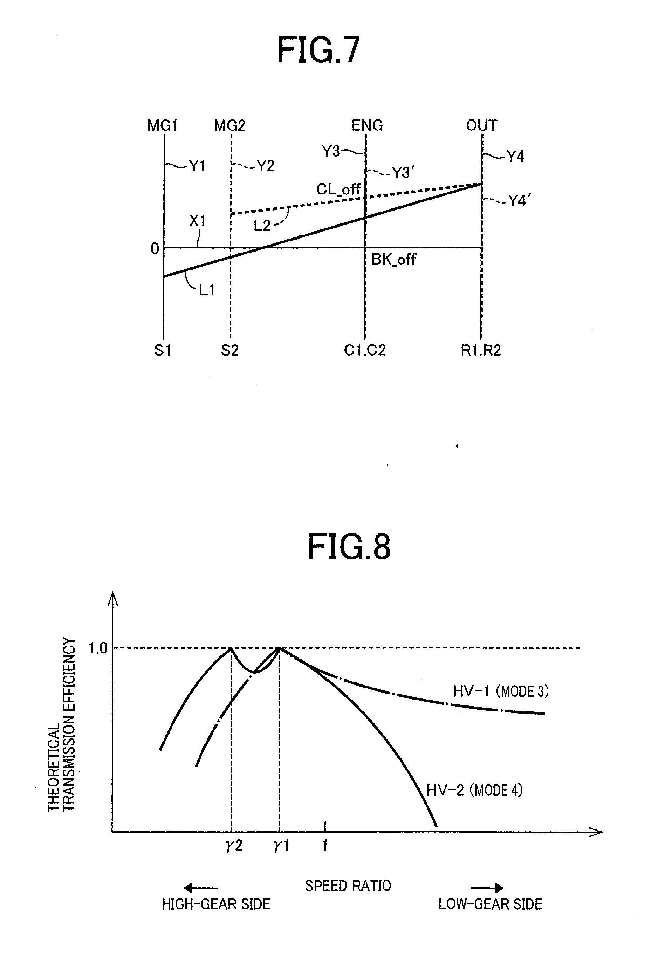

Fig. 8 is the view for explaining transmission efficiency of the drive system 10, wherein a speed ratio is taken along the horizontal axis while theoretical transmission efficiency is taken along the vertical axis. The speed ratio indicated in Fig. 8 is a ratio of the input side speed of the first and second planetary gear sets 14 and 16 to the output side speed, that is, the speed reduction ratio, which is for example, a ratio of the rotating speed of the input rotary member in the form of the carrier C1 to the rotating speed of the output gear 30 (ring gears R1 and R2). The speed ratio is taken along the horizontal axis in Fig. 8 such that the left side as seen in the view of Fig. 8 is a side of high gear positions having comparatively low speed ratio values while the right side is a side of low gear positions having comparatively high speed ratio values. Theoretical transmission efficiency indicated in Fig. 8 is a theoretical value of the transmission efficiency of the drive system 10, which has a maximum value of 1.0 when an entirety of the drive force is mechanically transmitted from the first and second planetary gear sets 14 and 16 to the output gear 30, without transmission of an electric energy through the electric path.

In Fig. 8, a one-dot chain line represents the transmission efficiency of the drive system 10 placed in the mode 3 (V-1), while a solid line represents the transmission efficiency in the mode 4 (HV-2). As indicated in Fig. 8, the transmission efficiency of the drive system 10 in the mode 3 (HV-1) has a maximum value at a speed ratio value γ1. At this speed ratio value γ1, the operating speed of the first electric motor MG1 (rotating speed of the sun gear S1) is zero, and an amount of an electric energy transmitted through the electric path is zero during generation of the reaction force, so that the drive force is only mechanically transmitted from the engine 12 and the second electric motor MG2 to the output gear 30, at an operating point corresponding to the speed ratio value γ1. This operating point at which the transmission efficiency is maximum while the amount of the electric energy transmitted through the electric path is zero will be hereinafter referred to as a "mechanical point (mechanical transmission point)". The speed ratio value γ1 is lower than "1", that is, a speed ratio on an overdrive side, and will be hereinafter referred to as a "first mechanical transmission speed ratio value γ1". As indicated in Fig. 8, the transmission efficiency in the mode 3 gradually decreases with an increase of the speed ratio from the first mechanical transmission speed ratio value γ1 toward the low-gear side, and abruptly decreases with a decrease of the speed ratio from the first mechanical transmission speed ratio value γ1 toward the high-gear side.

In the mode 4 (HV-2) of the drive system 10, the gear ratios ρ1 and ρ2 of the first planetary gear set 14 and second planetary gear set 16 having the four rotary elements in the engaged state of the clutch CL are determined such that the operating speeds of the first electric motor MG1 and second electric motor MG2 are indicated at respective different positions along the horizontal axis of the collinear chart of Fig. 6, so that the transmission efficiency in the mode 4 has a maximum value at a mechanical point at a speed ratio value γ2, as well as at the speed ratio value γ1, as indicated in Fig. 8. Namely, in the mode 4, the rotating speed of the first electric motor MG1 is zero at the first mechanical transmission speed ratio value γ1 at which the amount of the electric energy transmitted through the electric path is zero during generation of the reaction force by the first electric motor MG1, while the rotating speed of the second electric motor MG2 is zero at the speed ratio value γ2 at which the amount of the electric energy transmitted through the electric path is zero during generation of the reaction force by the second electric motor MG2. The speed ratio value γ2 will be hereinafter referred to as a "second mechanical transmission speed ratio value γ2". This second mechanical transmission speed ratio value γ2 is smaller than the first mechanical transmission speed ratio value γ1. In the mode 4, the drive system 10 has the mechanical point located on the high-gear side of the mechanical point in the mode 3.

As indicated in Fig. 8, the transmission efficiency in the mode 4 more abruptly decreases with an increase of the speed ratio on a low-gear side of the first mechanical transmission speed ratio value γ1, than the transmission efficiency in the mode 3. In a region of the speed ratio between the first mechanical transmission speed ratio value γ1 and second mechanical transmission speed ratio value γ2, the transmission efficiency in the mode 4 changes along a concave curve. In this region, the transmission efficiency in the mode 4 is almost equal to or higher than that in the mode 3. The transmission efficiency in the mode 4 decreases with a decrease of the speed ratio from the second mechanical transmission speed ratio value γ2 toward the high-gear side, but is higher than that in the mode 3. That is, the drive system placed in the mode 4 has not only the first mechanical transmission speed ratio value γ1, but also the second mechanical transmission speed ratio value γ2 on the high-gear side of the first mechanical transmission speed ratio value γ1, so that the transmission efficiency of the drive system can be improved in high-gear positions having comparatively low speed ratio values. Thus, a fuel economy during running of the vehicle at a relatively high speed is improved owing to an improvement of the transmission efficiency.

As described above referring to Fig. 8, the transmission efficiency of the drive system 10 during a hybrid running of the vehicle with an operation of the engine 12 used as the vehicle drive power source and operations of the first and second electric motors MG1 and MG2 to generate a vehicle drive force and/or an electric energy as needed can be improved by adequately switching the vehicle drive mode between the mode 3 (HV-1) and mode 4 (HV-2). For instance, the mode 3 is established in low-gear regions having speed ratio values lower than the first mechanical transmission speed ratio value γ1, while the mode 4 is established in high-gear regions having speed ratio values higher than the first mechanical transmission speed ratio value γ1, so that the transmission efficiency can be improved over a wide range of the speed ratio covering the low-gear region and the high-gear region.

The drive mode HV-3 indicated in Fig. 3 corresponds to the mode 5 (drive mode 5) of the drive system 10, which is preferably the hybrid drive mode in which the engine 12 is operated as the vehicle drive power source while the first electric motor MG1 is operated as needed to generate a vehicle drive force and/or an electric energy. In this mode 5, the engine 12 and first electric motor MG1 may be operated to generate a vehicle drive force, with the second electric motor MG2 being disconnected from a drive system. Fig. 7 is the collinear chart corresponding to this mode 5. Described by reference to this collinear chart, the carrier C1 of the first planetary gear set 14 and the carrier C2 of the second planetary gear set 16 are rotatable relative to each other in the released state of the clutch CL. In the released state of the brake BK, the carrier C2 of the second planetary gear set 16 is rotatable relative to the stationary member in the form of the housing 26. In this arrangement, the second electric motor MG2 can be held at rest while it is disconnected from the drive system (power transmitting path).

In the mode 3 in which the brake BK is placed in the engaged state, the second electric motor MG2 is kept in an operated state together with a rotary motion of the output gear 30 (ring gear R2) during running of the vehicle. In this operating state, the operating speed of the second electric motor MG2 may reach an upper limit value (upper limit) during running of the vehicle at a comparatively high speed, or a rotary motion of the ring gear R2 at a high speed is transmitted to the sun gear S2. In this respect, it is not necessarily desirable to keep the second electric motor MG2 in the operated state during running of the vehicle at a comparatively high speed, from the standpoint of the operating efficiency. In the mode 5, on the other hand, the engine 12 and the first electric motor MG1 may be operated to generate the vehicle drive force during running of the vehicle at the comparatively high speed, while the second electric motor MG2 is disconnected from the drive system, so that it is possible to reduce a power loss due to dragging of the unnecessarily operated second electric motor MG2, and to eliminate a limitation of the highest vehicle running speed corresponding to the permissible highest operating speed (upper limit of the operating speed) of the second electric motor MG2.

It will be understood from the foregoing description, the drive system 10 is selectively placed in one of the three hybrid drive modes in which the engine 12 is operated as the vehicle drive power source, namely, in one of the drive mode HV-1 (mode 3), drive mode HV-2 (mode 4) and drive mode HV-3 (mode 5), which are selectively established by respective combinations of the engaged and released states of the clutch CL and brake BK. Accordingly, the transmission efficiency can be improved to improve the fuel economy of the vehicle, by selectively establishing one of the three hybrid drive modes according to the vehicle running speed and the speed ratio, in which the transmission efficiency is the highest.

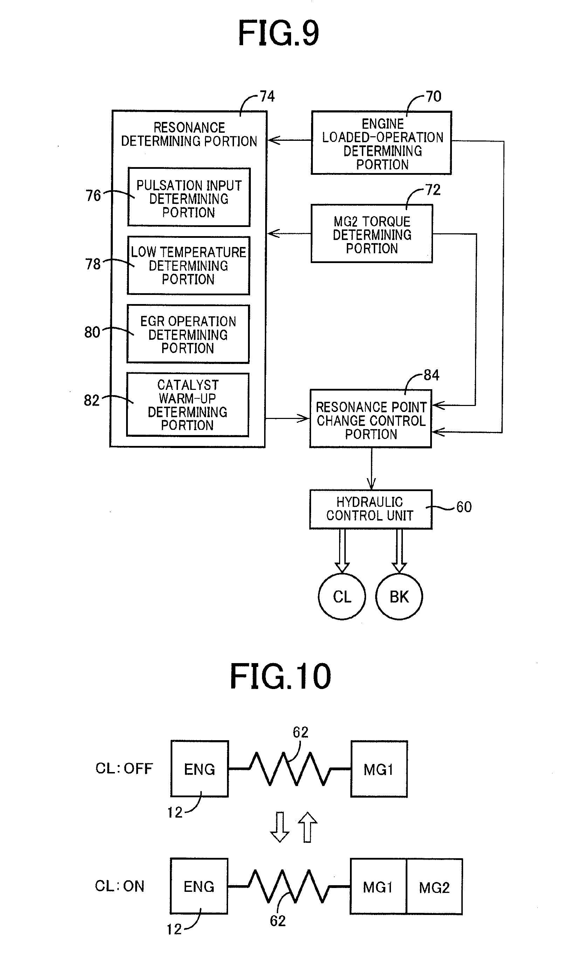

Fig. 9 is the functional block diagram for explaining major control functions of the electronic control device 40. An engine loaded-operation determining portion 70 shown in Fig. 9 is configured to determine whether the engine 12 is operated in a loaded condition. Described more specifically, the engine loaded-operation determining portion 70 determines whether the engine 12 is operated so as to generate an engine torque T_{E} equal to or larger than a predetermined value. The engine loaded-operation determining portion 70 obtains a negative determination if the engine 12 is placed in an idling state. Preferably, this determination is made on the basis of engine drive control commands applied from the electronic control device 40 to the engine control device 56. Alternatively, the determination may be made on the basis of the engine speed N_{E} detected by the engine speed sensor 44, the accelerator pedal operation amount A_{CC} detected by the accelerator pedal operation amount sensor 42, an intake air quantity Q_{A} of the engine 12 detected by an intake air quantity sensor not shown, etc. For example, the engine loaded-operation determining portion 70 calculates (estimates) the torque T_{E} of the engine 12 on the basis of the intake air quantity Q_{A} and a predetermined relationship, and determines that the engine 12 is operated in the loaded condition, if the calculated torque T_{E} is equal to or larger than a predetermined threshold value.

An MG2 torque determining portion 72 is configured to determine whether the torque of the second electric motor MG2 falls within a predetermined narrow range including zero. Preferably, the MG2 torque determining portion 72 makes this determination on the basis of a second electric motor operation control command applied from the electronic control device 40 to the inverter 58. For example, the predetermined narrow range is a range between zero and a predetermined value T_{id} which is a torque value of the second electric motor MG2 when the hybrid vehicle provided with the drive system 10 is in a coasting run while the accelerator pedal operation amount A_{CC} detected by the accelerator pedal operation amount sensor 42 is zero (while the accelerator pedal is placed in the non-operated position). Preferably, the MG2 torque determining portion 72 determines whether an absolute value of the torque of the second electric motor MG2 falls within the predetermined narrow range. The MG2 torque determining portion 72 may determine whether the torque of the second electric motor MG2 is considered to be close to zero or substantially zero.

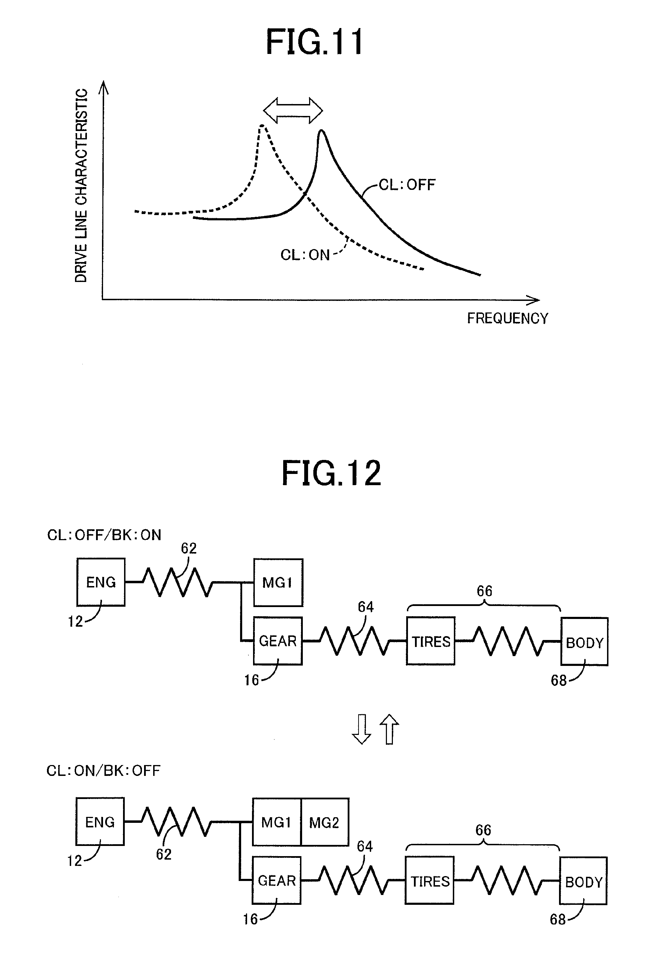

A resonance determining portion 74 is configured to determine whether or not a power transmitting system of the hybrid vehicle provided with the drive system 10 has a resonance. Namely, the resonance determining portion 74 detects or forecasts generation of a resonance in the power transmitting system. In other words, the resonance determining portion 74 determines whether a pulsation of a given frequency that causes generation of a resonance in the power transmitting system of the drive system 10 is likely to be generated. The "power transmitting system" means a system so-called "a drive line" for power transmission from the vehicle drive power source to the drive wheels. In the hybrid vehicle provided with the drive system 10, the power transmitting system is a power transmission system which is provided in a power transmitting path from the vehicle drive power source in the form of the engine 12, first electric motor MG1 and second electric motor MG2 to the drive wheels in the form of tires 68 (shown in Fig. 12), and which includes the first planetary gear set 14, second planetary gear set 16, input shaft 28 and output gear 30, and a damper 62, a drive shaft 64, the tires 66, and a body 68 (which are shown in Figs. 10 and 12).

Preferably, as shown in Fig. 9, the resonance determining portion 74 includes a pulsation input determining portion 76, a low temperature determining portion 78, an EGR operation determining portion 78 and a catalyst warm-up determining portion 82, the determining portions are configured to determine whether the power transmitting system has a resonance. The pulsation input determining portion 76 is configured to determine whether the power transmitting system has a resonance, on the basis of the vehicle running speed V and the operating speed N_{E} of the engine 12, and according to a predetermined relationship. For instance, the pulsation input determining portion 76 calculates a frequency of a pulsation (of an input torque) received from the roadway surface on which the vehicle is running (from the drive wheels), on the basis of the vehicle running speed V corresponding to the output speed N_{OUT} detected by the output speed sensor 50 and the engine speed N_{E} detected by the engine speed sensor 44, and determines that the pulsation received by the power transmitting system has been detected or forecasted, if the calculated frequency of the pulsation is substantially coincident with a resonance frequency of the power transmitting system, that is, falls within a predetermined range (band) of frequency a center point of which is equal to the resonance frequency. Alternatively, the pulsation input determining portion 76 calculates a frequency of a pulsation input as a result of a rotary motion of the engine 12, on the basis of the engine speed N_{E} detected by the engine speed sensor 44, and determines that the pulsation received by the power transmitting system has been detected or forecasted, if the calculated frequency of the pulsation is substantially coincident with the resonance frequency of the power transmitting system, that is, falls within the predetermined range (band) of frequency the center point of which is equal to the resonance frequency. The resonance frequency of the power transmitting system is determined by inertial values of various portions of the drive system 10, and by the operating states of the clutch CL and brake BK, as described below. That is, the resonance frequency values of the drive system 10 which correspond to the different combinations of the operating states of the clutch CL and brake BK are obtained by experimentation and stored in a memory. The pulsation input determining portion 76 determines whether or not the frequency of the pulsation received from the roadway surface, which is calculated on the basis of the vehicle running speed V and the engine speed N_{E}, or the frequency of the pulsation input as a result of the rotary motion of the engine 12 is substantially coincident with the resonance frequency value of the drive system 10 corresponding to the present combination of the operating states of the clutch CL and brake BK. If an affirmative determination is obtained, the pulsation input determining portion 76 determines that the input of the pulsation into the power transmitting system has been detected or forecasted.

The low temperature determining portion 78 is configured to determine whether the power transmitting system has a resonance, depending upon whether a temperature of the power transmitting system is equal to or lower than a predetermined threshold value. For instance, the low temperature determining portion 78 determines that the power transmitting system in the hybrid vehicle has a resonance, if the oil temperature T_{OIL} detected by the oil temperature sensor 52 is equal to or lower than a predetermined threshold value T_{bo} (e.g., about -20°C). In other words, the low temperature determining portion 78 determines that there is a high degree of probability that the power transmitting system generates vibrations, if the oil temperature T_{OIL} representing the temperature of the power transmitting system is equal to or lower than the predetermined threshold value T_{bo}. Although the temperature of the power transmitting system corresponds to the oil temperature T_{OIL} of the working fluid supplied to the various parts of the drive system 10, the oil temperature T_{OIL} may be replaced by a cooling water temperature of the engine 12, a temperature of the battery connected to the first and second electric motors MG1 and MG2, or an average value of the above-indicated temperature of the working fluid, engine cooling water temperature and battery temperature.

The EGR operation determining portion 80 is configured to determine whether the power transmitting system has a resonance, depending upon whether an EGR device is operated to return a portion of the exhaust gas of the engine 12 into the intake gas. For example, the EGR operation determining portion 80 determines whether the EGR valve 34 is placed in an open state (in which the exhaust gas is returned into the intake pipe), on the basis of the engine drive control commands applied from the electronic control device 40 to the engine control device 56. If this determination is affirmative, that is, if the EGR valve 34 is placed in the open state, the EGR operation determining portion 80 determines that the power transmitting system of the hybrid vehicle has a resonance. In other words, the EGR operation determining portion 80 determines that there is a high degree of probability that the power transmitting system generates vibrations, if the EGR valve 34 is placed in the open state.

The catalyst warm-up determining portion 82 is configured to determine whether the power transmitting system has a resonance, depending upon whether the engine 12 is operated to warm up a catalytic converter. For instance, the catalyst warm-up determining portion 82 determines whether the engine 12 is operated to warm up the catalytic converter, depending on the basis of the engine drive control commands applied from the electronic control device 40 to the engine control device 56. If this determination is affirmative, that is, if the engine 12 is operated to warm up the catalytic converter, the catalyst warm-up determining portion 82 determines that the power transmitting system in the hybrid vehicle has a resonance. In other words, the catalyst warm-up determining portion 82 determines that there is a high degree of probability that the power transmitting system generates vibrations, if the engine 12 is operated to warm up the catalytic converter.

In the drive system 10 according to the present embodiment wherein the internal combustion engine in the form of the engine 12 is provided as a vehicle drive power source, a vibration damping torsional damper is provided between the engine 12 and transaxles. The power transmitting system (drive line) including the torsional damper has a specific resonance frequency determined by its specific constructional arrangement. In the prior art, there is a risk of instability of combustion of the engine 12 and likeliness of occurrence of a variation of combustion among the cylinders of the engine 12, while the temperature of the power transmitting system is comparatively low, while the EGR device is operated, or while the catalytic converter is warmed up. In such condition as described above in which the variation of combustion among the cylinders of the engine 12 is likely to occur, there is a risk of generation of noises and vibrations as a result of amplification of a revolution 0.5-order component of the engine 12, namely, a component of pulsation generated at a time interval equal to a half of the period of the engine revolution, which amplification takes place due to coincidence of the revolution 0.5-order component with the resonance frequency of the power transmitting system including a damper main in the form of the torsional damper, within an ordinary operation band of frequency of the engine 12 (e.g., a band of about 1000-2000[rpm]).

Fig. 10 is the view schematically illustrating different resonance frequency values of the power transmitting system in the above-descried drive system 10, which correspond to the respective different operating states of the clutch CL. Fig. 11 is the view for explaining different characteristics of the power transmitting system (resonance frequency characteristics) of the power transmitting system corresponding to the respective different operating states of the clutch CL. In Fig. 11, a solid line represents the characteristic in the released state of the clutch CL, while a broken line represents the characteristic in the engaged state of the clutch CL. In the drive system 10, its resonance point (resonance frequency) changes depending upon whether the clutch CL is placed in the engaged state or the released state, while the brake BK is placed in the released state. Namely, the second electric motor MG2 is not connected to the power transmitting system between the engine 12 and the first electric motor MG1, in the released state of the clutch CL, as indicated in an upper part of Fig. 10. When the clutch CL is switched from the released state to the engaged state, the second electric motor MG2 is connected to the power transmitting system between the engine 12 and the first electric motor MG1, as indicated in a lower part of Fig. 10. Accordingly, the components such as the rotor 24 of the second electric motor MG2 is added to the power transmitting system, so that the resonance point of the power transmitting system is changed as a result of a change of characteristic relating to the inertia (inertia balance), as indicated in Fig. 11. In particular, a resonance point relating to an arrangement around the damper 62 (damper main) disposed between the engine 12 and the first electric motor MG1 is changed as a result of switching of the operating state of the clutch CL, as indicated in Fig. 10.

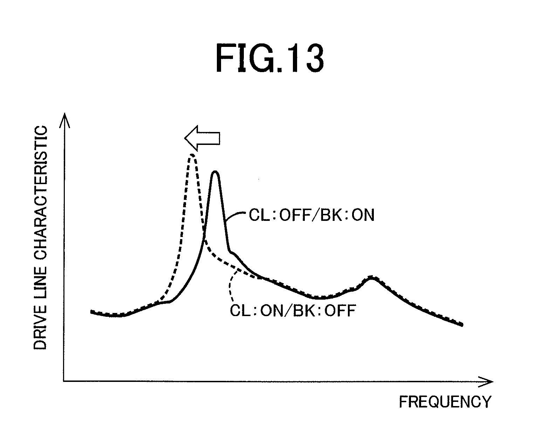

Fig. 12 is the view schematically illustrating different resonance frequency values of the power transmitting system in the drive system 10, which correspond to the respective different operating states of at least one of the clutch CL and brake BK. Fig. 13 is the view for explaining different characteristics of the power transmitting system (resonance frequency characteristics) of the power transmitting system which correspond to respective different combinations of the operating states of the clutch CL and brake BK. In Fig. 13, a solid line represents the characteristic in the released state of the clutch CL and in the engaged state of the brake BK, while a broken line represents the characteristic in the engaged state of the clutch CL and in the released state of the brake BK. In particular, Figs. 12 and 13 represent a characteristic of the damper main when the torque of the second electric motor MG2 is close to zero (substantially zero). As indicated in Figs. 12 and 13, the resonance point (resonance frequency) in the drive system 10 changes as a result of switching of the operating state of the brake BK, in addition to or in place of switching of the operating state of the clutch CL. Namely, the second electric motor MG2 is not connected to the power transmitting system between the engine 12 and the first electric motor MG1, in the released state of the clutch CL and in the engaged state of the brake BK, that is, when the mode 3 (HV-1) indicated in Fig. 3 is established, as indicated in an upper part of Fig. 12. In the engaged state of the clutch CL and in the released state of the brake BK, that is, when the mode 4 (HV-2) indicated in Fig. 3 is established, on the other hand, the second electric motor MG2 is connected to the power transmitting system between the engine 12 and the first electric motor MG1, as indicated in a lower part of Fig. 12. Namely, the second electric motor MG2 is connected to an input-side power transmitting system. Accordingly, the resonance point of the power transmitting system is changed as a result of a change of the characteristic relating to the inertia (inertia balance), as indicated in Fig. 13.

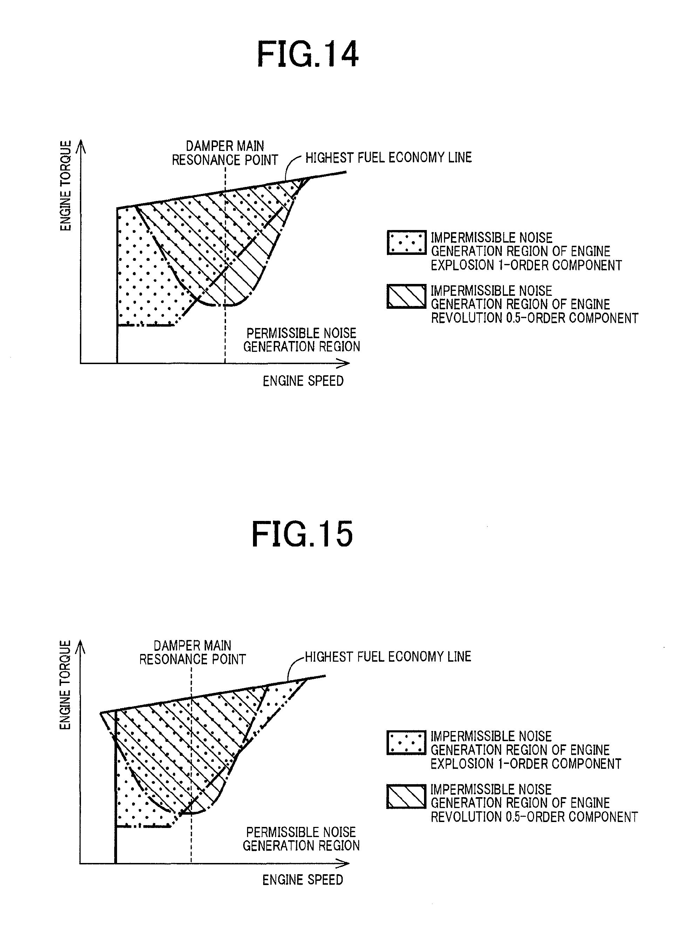

Figs. 14 and 15 are the views illustrating regions of an operating point of the engine 12 in which noises are generated due to resonance. Fig. 14 illustrates the regions when the clutch CL is placed in the released state, while Fig. 15 illustrates the regions when the clutch CL is placed in the engaged state. In Figs. 14 and 15, a dotted area represents an impermissible region of generation of noises due to the engine explosion 1-order component (pulsation generated at the time interval equal to the period of the engine explosion), while a hatched area represents an impermissible region of generation of noises due to the engine revolution 0.5-order component (pulsation generated at the time interval equal to the half of the period of the engine revolution). In Figs. 14 and 15, a broken line represents the resonance frequency (resonance point) of the damper main, while a solid line represents a highest fuel economy line of the engine 12. This highest fuel economy line is a curve connecting highest fuel economy points on an iso-fuel-economy curve, which are moved through a highest fuel economy area with a rise of the engine speed N_{E} and which are obtained preliminarily by experimentation. The highest fuel economy line may also be considered as a succession of highest fuel economy points of the engine 12 predetermined by experimentation so as to provide a good compromise between drivability and fuel economy of the hybrid vehicle.

It will be understood from Figs. 14 and 15 that the hatched impermissible region of generation of the noises due to the engine revolution 0.5-order component, which noises are included in the noises generated due to pulsation of the rotary motion of the engine 12, is moved when the operating state of the clutch CL is switched or changed. Namely, the impermissible region of generation of the noises due to the engine revolution 0.5-order component, which region is represented by the hatched area in Fig. 14, is located on the side of a comparatively high operating speed of the engine (on a comparatively high engine speed side), so that an area of overlapping of this impermissible region with respect to the impermissible region of generation of the noises due to the engine explosion 1-order component, which region is represented by the dotted area, is comparatively narrow, whereby a permissible region of generation of the noises due to pulsation of the rotary motion of the engine 12 is comparatively narrow. In this respect, it is noted that according to characteristics of the drive line in the drive system 10, the resonance frequency (resonance point) of the damper main is lowered as a result of addition of an inertia of the second electric motor MG2 to the power transmitting system between the engine 12 and the first electric motor MG1. Accordingly, by switching the clutch CL to the engaged state, the hatched impermissible region of generation of the noises due to the engine revolution 0.5-order component is moved toward the side of a comparatively low operating speed of the engine (on a comparatively low engine speed side), with respect to the region indicated in Fig. 14, as indicated in Fig. 15. Accordingly, the area of overlapping of the hatched impermissible region with respect to the dotted impermissible region of generation of the noises due to the engine explosion 1-order component is broadened, whereby the permissible region of generation of the noises due to pulsation of the rotary motion of the engine 12 is broadened. That is, the operating point of the engine 12 can be located in a better region for improving the fuel economy.

Depending upon a design of the drive system 10, on the other hand, the impermissible region of generation of the noises due to the engine revolution 0.5-order component when the clutch CL is placed in the engaged state may be located on the side of an excessively low operating speed of the engine (on a comparatively low engine speed side), so that the area of overlapping of this impermissible region with respect to the impermissible region of generation of the noises due to the engine explosion 1-order component is narrow, whereby the permissible region of generation of the noises due to pulsation of the rotary motion of the engine 12 is narrow, contrary to the example of Figs. 14 and 15. In this case, the clutch CL is brought into the released state, so that the impermissible region of generation of the noises due to the engine revolution 0.5-order component is moved toward the side of the comparatively high operating speed of the engine (on the comparatively high engine speed side). Accordingly, the area of overlapping of this impermissible region with respect to the impermissible region of generation of the noises due to the engine explosion 1-order component is broadened, so that the permissible range of generation of the noises due to pulsation of the rotary motion of the engine 12 is broadened. That is, the operating point of the engine 12 can be located in a better region for improving the fuel economy.

In view of the characteristics of the drive system 10 described, above, a resonance point change control portion 84 shown in Fig. 9 is configured to change the operating state of the clutch CL, when both of the engine loaded-operation determining portion 70 and the MG2 torque determining portion 72 make affirmative determinations, that is, when the engine 12 is operated in a loaded condition while the torque of the second electric motor MG2 falls within the predetermined narrow range including zero. Preferably, the resonance point change control portion 84 switches the clutch CL to the engaged state when the engine 12 is operated in a loaded condition while the torque of the second electric motor MG2 falls within the predetermined narrow range including zero. As described above by reference to Figs. 12-15, the resonance frequency (resonance point) of the damper main in the power transmitting system is changed by switching the operating state of the clutch CL in the drive system 10. Accordingly, and described more specifically, the resonance point change control portion 84 implements a control for changing the resonance point in the power transmitting system, by switching the operating state of the clutch CL through the hydraulic control unit 60. For example, the resonance point change control portion 84 implements the control for switching the operating state of the clutch CL to the engaged state, even where the clutch CL should be placed in the released state to establish the mode 1 (HV-1), when the engine 12 is operated in a loaded condition while the torque of the second electric motor MG2 falls within the predetermined narrow range including zero.

When each of the engine loaded-operation determining portion 70, the MG2 torque determining portion 72 and the resonance determining portion 74 makes an affirmative determination, that is, when the generation of a resonance has been detected or forecasted while the engine 12 is operated in a loaded condition and while the torque of the second electric motor MG2 falls within the predetermined narrow range including zero, the resonance point change control portion 84 preferably implements the control for switching the operating state of the clutch CL. When both of the engine loaded-operation determining portion 70 and the MG2 torque determining portion 72 make affirmative determinations, and when at least one of the pulsation input determining portion 76, the low temperature determining portion 78, the EGR operation determining portion 80 and the catalyst warm-up determining portion 82 makes an affirmative determination, the resonance point change control portion 84 preferably implements the control for switching the operating state of the clutch CL. Preferably, the resonance point change control portion 84 implements the control for switching the operating state of the clutch CL to the engaged state when the engine 12 is operated in a loaded condition while the torque of the second electric motor MG2 falls within the predetermined narrow range including zero, and while the generation of a resonance has been detected or forecasted.

The resonance point change control portion 84 is preferably configured to selectively implement the above-described controls depending upon results of the determinations by the engine loaded-operation determining portion 70, the MG2 torque determining portion 72 and the resonance determining portion 74, when the drive system 10 is placed in a drive position "D", namely, when the selected shift position detected by the shift position sensor 54 is a forward drive position. The drive system 10 has a risk of generation of noises due to the revolution 0.5-order component of the engine 12 in addition to noises (rattling noises) due to the explosion 1-order component of the engine 12 when the torque of the second electric motor MG2 is close to zero, that is, falls within the predetermined narrow range including zero, while the engine 12 is operated in a loaded condition and while the EGR device is operated. Where the frequency of this engine revolution 0.5-order component is coincident with the resonance point of the damper main in the power transmitting system, in particular, the drive system 10 has a drawback of deterioration of the fuel economy since it is not possible to avoid the generation of the former noises unless a threshold line (corresponding to a one-dot chain line in Fig. 14, for example) for avoiding the generation of these noises is located on a higher-speed smaller-torque side of a threshold line (corresponding to a two-dot chain line in Fig. 14, for example) for avoiding the generation of the explosion 1-order component. The present embodiment is configured to change the characteristic of the drive line from the relationship illustrated in Fig. 14 to the relationship illustrated in Fig. 15, by switching the operating state of the clutch CL when the torque of the second electric motor MG2 falls within the predetermined narrow range including zero, while the engine 12 is operated in a loaded condition. Accordingly, it is possible to narrow the impermissible range of generation of noises and vibrations so that the operating point of the engine 12 can be located in a better region for improving the fuel economy, than in the prior art.

The resonance point change control portion 84 is preferably configured to change the resonance point of the power transmitting system of the drive system 10, depending upon results of the determinations by the engine loaded-operation determining portion 70 and the resonance determining portion 74, when the drive system 10 is placed in a parking position "P", namely, when the selected shift position detected by the shift position sensor 54 is a the parking position. While the hybrid vehicle provided with the drive system 10 is stationary (parked) in the parking position "P", the engine revolution 0.5-order component is likely to be generated during an operation of the engine 12 when the engine is operated in a loaded condition during a cold state or for warming up the catalyst converter. In this state, the operating state of the clutch CL is switched, preferably, to the engaged state, to establish the drive line characteristic in which the resonance point is comparatively different from the pulsation frequency of the engine 12, so that the generation of noises and vibrations can be effectively reduced.

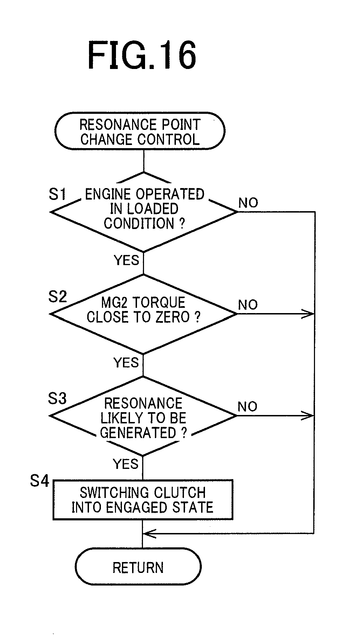

Fig. 16 is the flow chart for explaining a major portion of a resonance point change control implemented by the electronic control device 40. The resonance point change control is repeatedly implemented with a predetermined cycle time.

The resonance point change control is initiated with step S1 ("step" being hereinafter omitted), to determine whether the engine 12 is operated in a loaded condition. If a negative determination is obtained in S1, the present control routine is terminated. If an affirmative determination is obtained in S1, on the other hand, the control flow goes to S2 to determine whether the torque of the second electric motor MG2 is close to zero, that is, falls within the predetermined narrow range including zero. If a negative determination is obtained in S2, the present control routine is terminated. If an affirmative determination is obtained in S2, the control flow goes to S3 to determine whether the frequency of pulsation of the engine 12 is likely to generate a resonance in the power transmitting system, due to an operation of the engine 12 in a loaded condition in a cold state or with an operation of the EGR device, for instance. If a negative determination is obtained in S3, the present routine is terminated. If an affirmative determination is obtained in S3, the control flow goes to S4 to switch the operating state of the clutch CL, and preferably, after the clutch CL is placed in the engaged state, the present routine is terminated. It will be understood that S1 corresponds to the operation of the engine loaded-operation determining portion 70 while S2 corresponds to the operation of the MG2 torque determining portion 72, and that S3 corresponds to the operation of the resonance determining portion 74 while S4 corresponds to the operation of the resonance point change control portion 84.

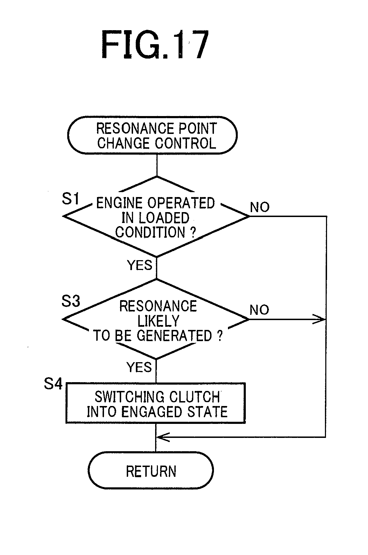

Fig. 17 is the flow chart for explaining a major portion of another example of the resonance point change control implemented by the electronic control device 40. This resonance point change control is repeatedly implemented with a predetermined cycle time. In Fig. 17, the same step numbers as used in Fig. 16 are used to identify the same steps, which will not be described redundantly. If the affirmative determination is obtained in S1 in the control of Fig. 17, that is, if it is determined that the engine 12 is operated in a loaded condition, the control flow goes to S3.

Other preferred embodiments of the present invention will be described in detail by reference to the drawings. In the following description, the same reference signs will be used to identify the same elements in the different embodiments, which will not be described redundantly.

### SECOND EMBODIMENT

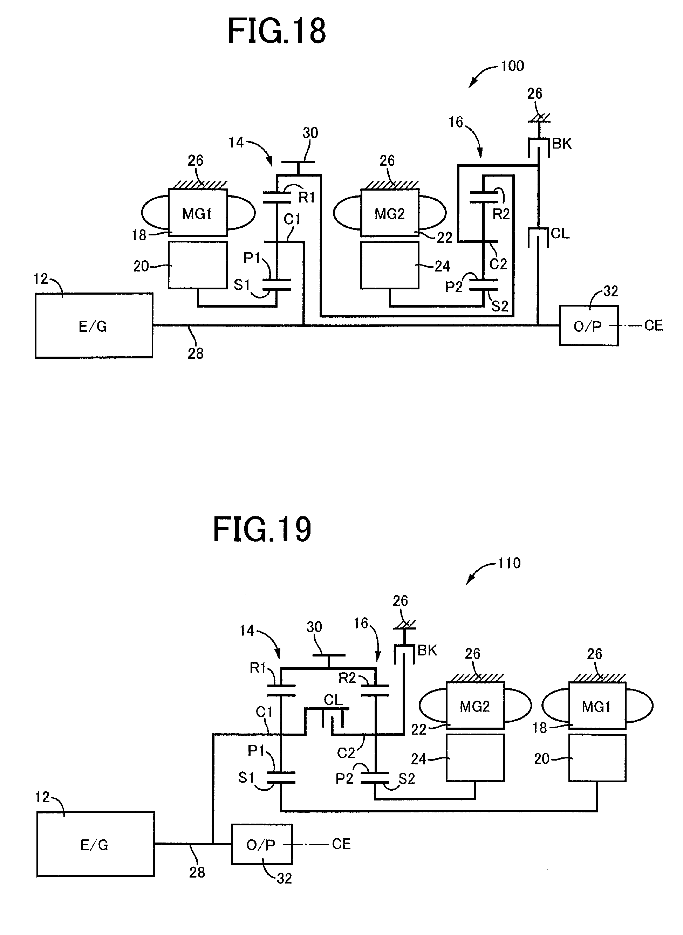

Fig. 18 is the schematic view for explaining an arrangement of a hybrid vehicle drive system 100 (hereinafter referred to simply as a "drive system 100") according to another preferred embodiment of this invention. In this drive system 100 shown in Fig. 18, the second planetary gear set 16, clutch CL and brake BK are disposed on one side of the first planetary gear set 14 remote from the engine 12, such that the second electric motor MG2 is interposed between the first planetary gear set 14, and the second planetary gear set 16, clutch CL and brake BK, in the axial direction of the center axis CE. Preferably, the clutch CL and brake BK are disposed at substantially the same position in the axial direction of the center axis CE. That is, the drive system 100 is configured such that the first electric motor MG1, first planetary gear set 14, second electric motor MG2, second planetary gear set 16, clutch CL, and brake BK are disposed coaxially with each other, in the order of description from the side of the engine 12, in the axial direction of the center axis CE. The hybrid vehicle drive control device according to the present invention is equally applicable to the present drive system 100 configured as described above.

### THIRD EMBODIMENT

Fig. 19 is a schematic view for explaining an arrangement of a hybrid vehicle drive system 110 (hereinafter referred to simply as a "drive system 110") according to a further preferred embodiment of this invention. In this drive system 110 shown in Fig. 19, the first planetary gear set 14, clutch CL, second planetary gear set 16 and brake BK which constitute a mechanical system are disposed on the side of the engine 12 in the axial direction of the center axis CE, while the first electric motor MG1 and second electric motor MG2 which constitute an electric system are disposed on one side of the mechanical system remote from the engine 12. That is, the drive system 110 is configured such that the first planetary gear set 14, clutch CL, second planetary gear set 16, brake BK, second electric motor MG2, and first electric motor MG1 are disposed coaxially with each other, in the order of description from the side of the engine 12, in the axial direction of the center axis CE. The hybrid vehicle drive control device according to the present invention is equally applicable to the present drive system 110 configured as described above.

### FOURTH EMBODIMENT

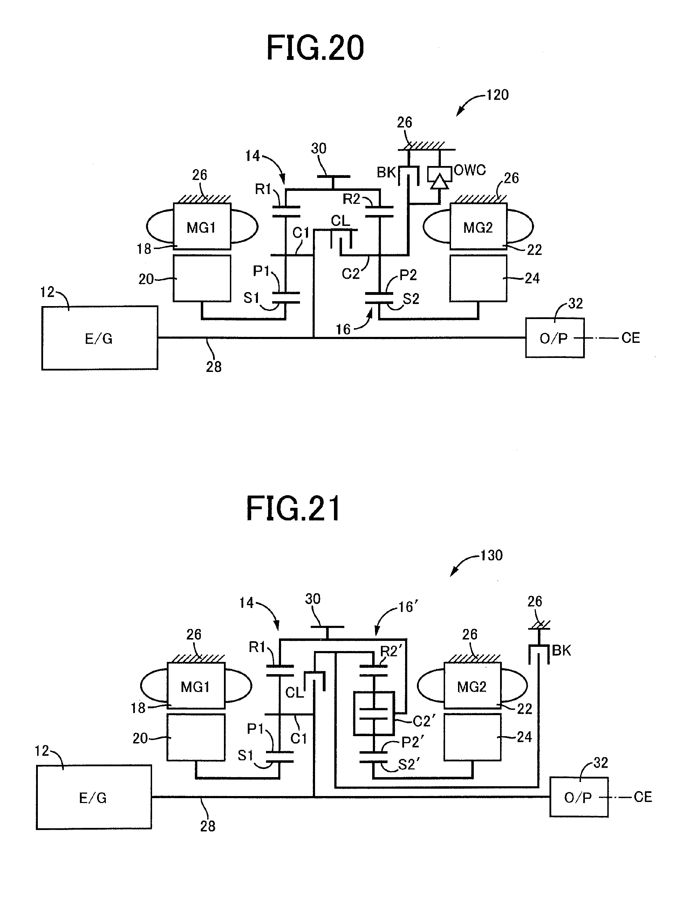

Fig. 20 is the schematic view for explaining an arrangement of a hybrid vehicle drive system 120 (hereinafter referred to simply as a "drive system 120") according to a still further preferred embodiment of this invention. In this drive system 120 shown in Fig. 20, a one-way clutch OWC is disposed in parallel with the brake BK, between the carrier C2 of the second planetary gear set 16 and the stationary member in the form of the above-indicated housing 26. The one-way clutch OWC permits a rotary motion of the carrier C2 in one of opposite directions relative to the housing 26, and inhibits a rotary motion of the carrier C2 in the other direction. Preferably, this one-way clutch OWC permits the rotary motion of the carrier C2 in the positive or forward direction relative to the housing 26, and inhibits the rotary motion of the carrier C2 in the negative or reverse direction. Namely, in a drive state where the carrier C2 is rotated in the negative direction, that is, where the second electric motor MG2 is operated to generate a negative torque, for example, the modes 1-3 can be established without the engaging action of the brake BK. The hybrid vehicle drive control device according to the present invention is equally applicable to the present drive system 120 configured as described above.

### FIFTH EMBODIMENT

Fig. 21 is the schematic view for explaining an arrangement of a hybrid vehicle drive system 130 (hereinafter referred to simply as a "drive system 130") according to a yet further preferred embodiment of this invention. This drive system 130 shown in Fig. 21 is provided with a second differential mechanism in the form of a double-pinion type second planetary gear set 16' disposed on the center axis CE, in place of the single-pinion type second planetary gear set 16. This second planetary gear set 16' is provided with rotary elements (elements) consisting of: a first rotary element in the form of a sun gear S2'; a second rotary element in the form of a carrier C2' supporting a plurality of pinion gears P2' meshing with each other such that each pinion gear P2' is rotatable about its axis and the axis of the planetary gear set; and a third rotary element in the form of a ring gear R2' meshing with the sun gear S2' through the pinion gears P2'.

The ring gear R1 of the first planetary gear set 14 is connected to the output rotary member in the form of the output gear 30, and to the carrier C2' of the second planetary gear set 16'. The sun gear S2' of the second planetary gear set 16' is connected to the rotor 24 of the second electric motor MG2. Between the carrier C1 of the first planetary gear set 14 and the ring gear R2' of the second planetary gear set 16', there is disposed the clutch CL which is configured to selectively couple these carrier C1 and ring gear R2' to each other (to selectively connect the carrier C1 and ring gear R2' to each other or disconnect the carrier C1 and ring gear R2' from each other). Between the ring gear R2' of the second planetary gear set 16' and the stationary member in the form of the housing 26, there is disposed the brake BK which is configured to selectively couple (fix) the ring gear R2' to the housing 26.

As shown in Fig. 21, the drive system 130 is configured such that the first planetary gear set 14 and second planetary gear set 16' are disposed coaxially with the input shaft 28, and opposed to each other in the axial direction of the center axis CE. Namely, the first planetary gear set 14 is disposed on one side of the second planetary gear set 16' on the side of the engine 12, in the axial direction of the center axis CE. The first electric motor MG1 is disposed on one side of the first planetary gear set 14 on the side of the engine 12, in the axial direction of the center axis CE. The second electric motor MG2 is disposed on one side of the second planetary gear set 16' which is remote from the engine 12, in the axial direction of the center axis CE. Namely, the first electric motor MG1 and second electric motor MG2 are opposed to each other in the axial direction of the center axis CE, such that the first planetary gear set 14 and second planetary gear set 16' are interposed between the first electric motor MG1 and second electric motor MG2. That is, the drive system 130 is configured such that the first electric motor MG1, first planetary gear set 14, clutch CL, second planetary gear set 16', second electric motor MG2, and brake BK are disposed coaxially with each other, in the order of description from the side of the engine 12, in the axial direction of the center axis CE. The hybrid vehicle drive control device according to the present invention is equally applicable to the present drive system 130 configured as described above.

### SIXTH EMBODIMENT

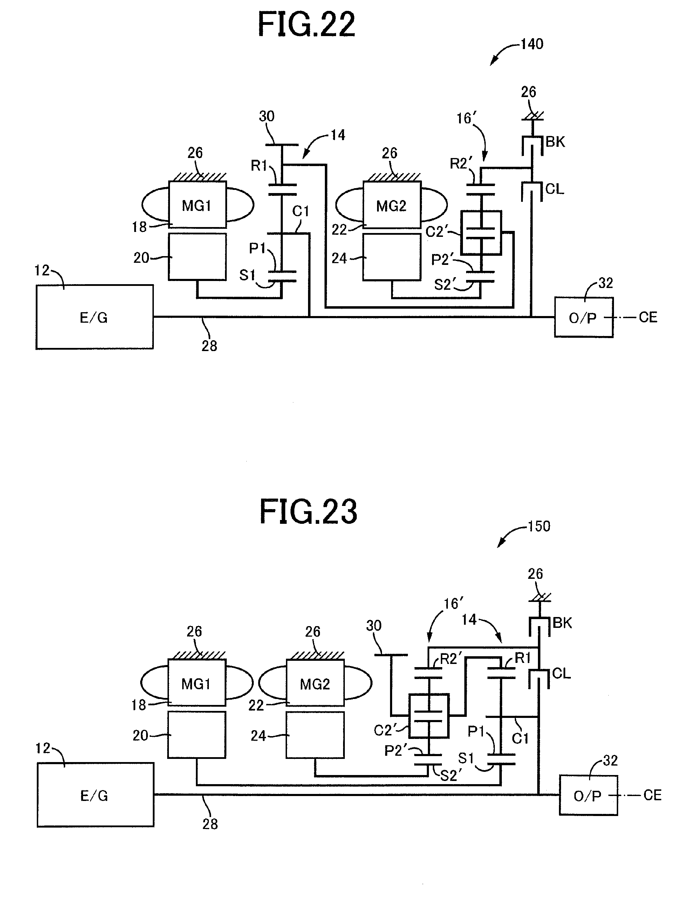

Fig. 22 is the schematic view for explaining an arrangement of a hybrid vehicle drive system 140 (hereinafter referred to simply as a "drive system 140") according to still another preferred embodiment of this invention. In this drive system 140 shown in Fig. 22, the second planetary gear set 16', clutch CL and brake BK are disposed on one side of the first planetary gear set 14 remote from the engine 12, such that the second electric motor MG2 is interposed between the first planetary gear set 14, and the second planetary gear set 16', clutch CL and brake BK, in the axial direction of the center axis CE. Preferably, the clutch CL and brake BK are disposed at substantially the same position in the axial direction of the center axis CE. That is, the drive system 140 is configured such that the first electric motor MG1, first planetary gear set 14, second electric motor MG2, second planetary gear set 16', clutch CL, and brake BK are disposed coaxially with each other, in the order of description from the side of the engine 12, in the axial direction of the center axis CE. The hybrid vehicle drive control device according to the present invention is equally applicable to the present drive system 140 configured as described above.

### SEVENTH EMBODIMENT

Fig. 23 is the schematic view for explaining an arrangement of a hybrid vehicle drive system 150 (hereinafter referred to simply as a "drive system 150") according to yet another preferred embodiment of this invention. In this drive system 150 shown in Fig. 23, the first electric motor MG1 and second electric motor MG2 which constitute an electric system are disposed on the side of the engine 12 in the axial direction of the center axis CE, while the second planetary gear set 16', first planetary gear set 14, clutch CL, and brake BK which constitute a mechanical system are disposed on one side of the electric system remote from the engine 12. Preferably, the clutch CL and the brake BK are positioned at substantially the same position in the direction of the center axis CE. That is, the drive system 150 is configured such that the first electric motor MG1, second electric motor MG2, second planetary gear set 16', first planetary gear set 14, clutch CL, and brake BK are disposed coaxially with each other, in the order of description from the side of the engine 12, in the axial direction of the center axis CE. The hybrid vehicle drive control device according to the present invention is equally applicable to the present drive system 150 configured as described above.

### EIGHTH EMBODIMENT

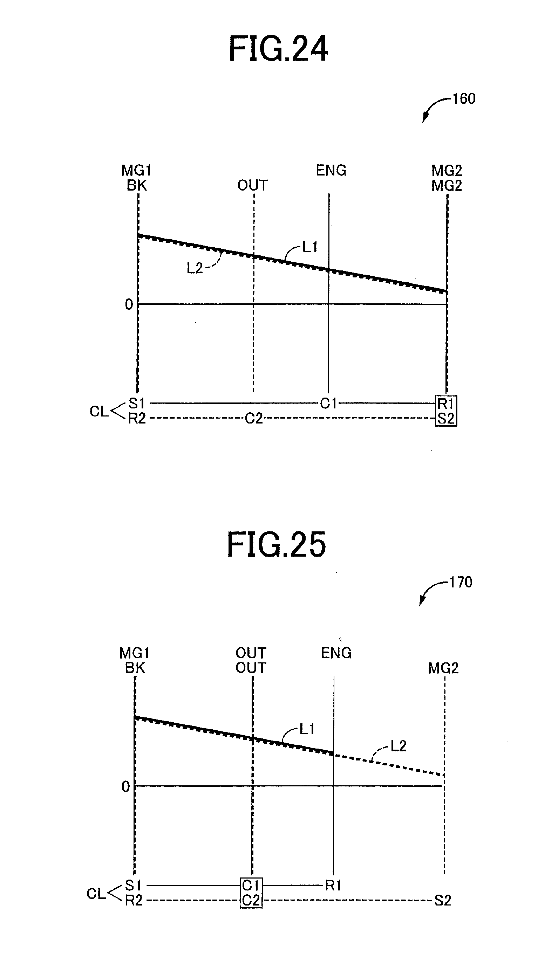

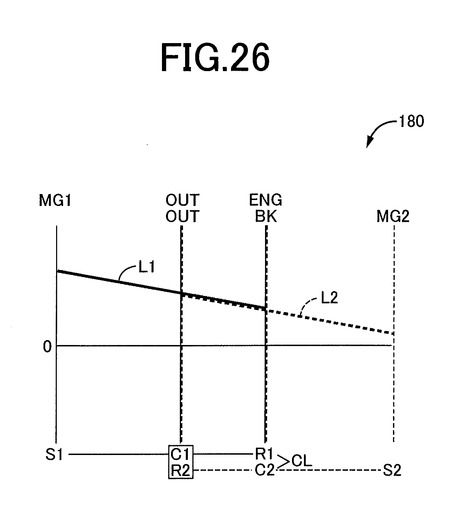

Figs. 24-26 are the collinear charts for explaining arrangements and operations of respective hybrid vehicle drive systems 160, 170 and 180 according to other preferred embodiments of this invention in place of the drive system 10. In Figs. 24-26, the relative rotating speeds of the sun gear S1, carrier C1 and ring gear R1 of the first planetary gear set 14 are represented by the solid line L1, while the relative rotating speeds of the sun gear S2, carrier C2 and ring gear R2 of the second planetary gear set 16 are represented by the broken line L2, as in Figs. 4-7. In the drive system 160 for the hybrid vehicle shown in Fig. 24, the sun gear S1, carrier C1 and ring gear R1 of the first planetary gear set 14 are respectively connected to the first electric motor MG1, engine 12 and second electric motor MG2, while the sun gear S2, carrier C2 and ring gear R2 of the second planetary gear set 16 are respectively connected to the second electric motor MG2 and output gear 30, and to the housing 26 through the brake BK. The sun gear S1 and the ring gear R2 are selectively connected to each other through the clutch CL. The ring gear R1 and the sun gear S2 are connected to each other. In the drive system 170 for the hybrid vehicle shown in Fig. 25, the sun gear S1, carrier C1 and ring gear R1 of the first planetary gear set 14 are respectively connected to the first electric motor MG1, output gear 30 and engine 12, while the sun gear S2, carrier C2 and ring gear R2 of the second planetary gear set 16 are respectively connected to the second electric motor MG2 and output gear 30, and to the housing 26 through the brake BK. The sun gear S1 and the ring gear R2 are selectively connected to each other through the clutch CL. The clutches C 1 and C2 are connected to each other. In the drive system 180 for the hybrid vehicle shown in Fig. 26, the sun gear S1, carrier C1 and ring gear R1 of the first planetary gear set 14 are respectively connected to the first electric motor MG1, output gear 30 and engine 12, while the sun gear S2, carrier C2 and ring gear R2 of the second planetary gear set 16 are respectively connected to the second electric motor MG2, to the housing 26 through the brake BK, and to the output gear 30. The ring gear R1 and the carrier C2 are selectively connected to each other through the clutch CL. The carrier C1 and ring gear R2 are connected to each other.

The drive systems for the hybrid vehicle shown in Figs. 24-26 are identical with each other in that each of these drive systems for the hybrid vehicle is provided with the first differential mechanism in the form of the first planetary gear set 14 and the second differential mechanism in the form of the second planetary gear set 16, 16', which have four rotary elements (whose relative rotating speeds are represented) in the collinear chart, and is further provided with the first electric motor MG1, second electric motor MG2, engine 12 and output rotary member (output gear 30) which are connected to the respective four rotary elements, and wherein one of the four rotary elements is constituted by the rotary element of the first planetary gear set 14 and the rotary element of the second planetary gear set 16, 16' which are selectively connected to each other through the clutch CL, and the rotary element of the second planetary gear set 16, 16' selectively connected to the rotary element of the first planetary gear set 14 through the clutch CL is selectively fixed to the stationary member in the form of the housing 26 through the brake BK, as in the drive system for the hybrid vehicle shown in Figs. 4-7. Namely, the hybrid vehicle drive control device of the present invention described above by reference to Fig. 9 and the other figures is suitably applicable to the drive systems shown in Figs. 24-26.

As described above, the illustrated embodiments are configured such that the hybrid vehicle is provided with: the first differential mechanism in the form of the first planetary gear set 14 and the second differential mechanism in the form of the second planetary gear set 16, 16', which have the four rotary elements as a whole when the clutch CL is placed in the engaged state (and thus the first planetary gear set 14 and the second planetary gear set 16, 16' are represented as the four rotary elements in the collinear charts such as Figs. 4-7); and the engine 12, the first electric motor MG1, the second electric motor MG2 and the output rotary member in the form of the output gear 30 which are respectively connected to the four rotary elements. One of the four rotary elements is constituted by the rotary element of the above-described first differential mechanism and the rotary element of the above-described second differential mechanism which are selectively connected to each other through the clutch CL, and one of the rotary elements of the first and second differential mechanisms which are selectively connected to each other through the clutch CL is selectively fixed to the stationary member in the form of the housing 26 through the brake BK. The drive control device is configured to switch the operating state of the clutch CL when the engine 12 is operated in the loaded condition while the torque of the second electric motor MG2 falls within the predetermined narrow range including zero. Accordingly, when the torque of the second electric motor is close to zero and the resonance in the power transmitting system is likely to be generated, an inertia balance of the power transmitting system is changed to change the resonance point of the power transmitting system, so that generation of a resonance in the power transmitting system can be effectively reduced. Namely, the illustrated embodiments provide a drive control device in the form of the electronic control device 40 for a hybrid vehicle, which permits reduction of generation of vibrations in the power transmitting system of the hybrid vehicle.

The illustrated embodiments are further configured to switch the operating state of the clutch CL when the engine 12 is operated in the loaded condition while the torque of the second electric motor MG2 falls within the predetermined narrow range including zero, and when generation of a resonance has been detected or forecasted. Accordingly, the inertia balance of the power transmitting system is changed to change the resonance point of the power transmitting system when the torque of the second electric motor MG2 is close to zero and generation of the resonance in the power transmitting system is likely to be detected or forecasted, so that generation of the resonance in the power transmitting system can be effectively reduced.

The first planetary gear set 14 is provided with a first rotary element in the form of the sun gear S1 connected to the first electric motor MG1, a second rotary element in the form of the carrier C1 connected to the engine 12, and a third rotary element in the form of the ring gear R1 connected to the output gear 30, while the second planetary gear set 16 (16') is provided with a first rotary element in the form of the sun gear S2 (S2') connected to the second electric motor MG2, a second rotary element in the form of the carrier C2 (C2'), and a third rotary element in the form of the ring gear R2 (R2'), one of the carrier C2 (C2') and the ring gear R2 (R2') being connected to the ring gear R1 of the first planetary gear set 14. The clutch CL is configured to selectively connect the carrier C1 of the first planetary gear set 14 and the other of the carrier C2 (C2') and the ring gear R2 (R2') which is not connected to the ring gear R1, to each other, while the brake BK is configured to selectively fix the other of the carrier C2 (C2') and the ring gear R2 (R2') which is not connected to the ring gear R1, to a stationary member in the form of the housing 26. Accordingly, it is possible to reduce the generation of vibrations of the power transmitting system of the hybrid vehicle drive system 10 having a highly practical arrangement.

While the preferred embodiments of this invention have been described by reference to the drawings, it is to be understood that the invention is not limited to the details of the illustrated embodiments, but may be embodied with various changes which may occur without departing from the spirit of the invention.

### NOMENCLATURE OF REFERENCE SIGNS

| | | | |
|---|---|---|---|
| 10, 100, 110, 120, 130, 140, 150, 160, 170, 180: Hybrid vehicle drive system | | | |
| 12: Engine | 14: First planetary gear set (First differential mechanism) | | |
| 16, 16': Second planetary gear set (Second differential mechanism) | | | |
| 18, 22: Stator | 20, 24: Rotor | 26: Housing (Stationary member) | |
| 28: Input shaft | 30: Output gear (Output rotary member) | | |
| 32: Oil pump | 34: EGR valve | | |
| 40: Electronic control device (Drive control device) | | | |
| 42: Accelerator pedal operation amount sensor | | | 44: Engine speed sensor |
| 46: MG1 speed sensor | 48: MG2 speed sensor | | 50: Output speed sensor |
| 52: Oil temperature sensor 54: Shift position | | | sensor |
| 56: Engine control device | 58: Inverter | 60: Hydraulic control unit | |
| 62: Damper | 64: Drive shaft | 66: Tires | 68: Body |
| 70: Engine loaded-operation determining portion | | | |
| 72: MG2 torque determining portion | | 74: Resonance determining portion | |
| 76: Pulsation input determining portion | | | |
| 78: Low temperature determining portion | | | |

| | | | |
|---|---|---|---|
| 80: EGR operation determining portion | | | |
| 82: Catalyst warm-up determining portion | | | |
| 84: Resonance point change control portion | | | |
| BK: Brake | CL: Clutch | C1, C2, C2': Carrier (Second rotary element) | |
| MG1: First electric motor | | MG2: Second electric motor | |
| OWC: One-way clutch | | P1, P2, P2': Pinion gear | |
| R1, R2, R2': Ring gear (Third rotary element) | | | |
| S1, S2, S2': Sun gear (First rotary element) | | | |

## Claims

1. A drive control device for a hybrid vehicle provided with: a first differential mechanism and a second differential mechanism which have four rotary elements as a whole; and an engine, a first electric motor, a second electric motor and an output rotary member which are respectively connected to said four rotary elements, and wherein one of said four rotary elements is constituted by the rotary element of said first differential mechanism and the rotary element of said second differential mechanism which are selectively connected to each other through a clutch, and one of the rotary elements of said first and second differential mechanisms which are selectively connected to each other through said clutch is selectively fixed to a stationary member through a brake, the drive control device being **characterized by**:
switching an operating state of said clutch when said engine is operated in a loaded condition while a torque of said second electric motor falls within a predetermined narrow range including zero.

2. The drive control device according to claim 1, wherein the operating state of said clutch is switched when said engine is operated in the loaded condition while the torque of said second electric motor falls within the predetermined narrow range including zero, and when generation of a resonance has been detected or forecasted.

3. The drive control device according to claim 1 or 2, wherein said first differential mechanism is provided with a first rotary element connected to said first electric motor, a second rotary element connected to said engine, and a third rotary element connected to said output rotary member, while said second differential mechanism is provided with a first rotary element connected to said second electric motor, a second rotary element, and a third rotary element, one of the second and third rotary elements being connected to the third rotary element of said first differential mechanism,
and wherein said clutch is configured to selectively connect the second rotary element of said first differential mechanism, and the other of the second and third rotary elements of said second differential mechanism which is not connected to the third rotary element of said first differential mechanism, to each other, while said brake is configured to selectively fix the other of the second and third rotary elements of said second differential mechanism which is not connected to the third rotary element of said first differential mechanism, to the stationary member.
